# EUROPÄISCHE PATENTSCHRIFT

(11) **EP 3 668 767 B1**
(45) Veröffentlichungstag und Bekanntmachung des Hinweises auf die Patenterteilung: **07.07.2021**
(21) Anmeldenummer: 18728849.3
(22) Anmeldetag: 29.05.2018
(51) Int. Cl.: B60T 13/68

(54) **ELEKTROPNEUMATISCHES FESTSTELLBREMSMODUL MIT DIREKT GESTEUERTEN VENTILEN**
ELECTROPNEUMATIC PARKING BRAKE MODULE WITH DIRECTLY CONTROLLED VALVES
MODULE DE FREIN DE STATIONNEMENT ÉLECTROPNEUMATIQUE AVEC VANNES À COMMANDE DIRECTE

(30) Priorität: 16.08.2017 DE 102017007780
(43) Veröffentlichungstag der Anmeldung: 24.06.2020
(73) Patentinhaber: ZF CV Systems Hannover GmbH, 30453 Hannover (DE)
(72) Erfinder: BENSCH, Uwe, 30161 Hannover (DE); VAN THIEL, Julian, 30938 Grossburgwedel (DE)
(74) Vertreter: Schiller, Harald
(86) Internationale Anmeldenummer: PCT/EP2018/064013
(87) Internationale Veröffentlichungsnummer: WO 2019/034295

(56) Entgegenhaltungen:
- WO-A1-2008/122382
- DE-B3-102008 007 877

## Beschreibung

Die Erfindung betrifft ein elektropneumatisches Feststellbremsmodul. Solche elektropneumatischen Feststellbremsmodule, auch elektropneumatische Handbrems-Module oder Parkbrems-Module genannt, dienen dazu sogenannte Feststellbremsen, in der Regel Federspeicherbremsen eines pneumatischen Bremssystems für ein Nutzfahrzeug zu betätigen.

Federspeicherbremsen können als Feststellbremsen bzw. Parkbremsen verwendet werden und weisen einen fehlerbelasteten Bremsaktuator auf, der drucklos die Bremse zuspannt, sodass beim drucklosen Zustand das Fahrzeug entsprechend gebremst ist. Zum Lösen der Federspeicherbremsen werden diese mit Druckluft beaufschlagt, sodass die Federspeicherbremsen gegen die Kraft der Feder gelöst werden.

In der Regel verfügen solche elektropneumatischen Feststellbremsmodule daher über einen Vorratsanschluss zum Anschließen eines Druckluftvorrats, und wenigstens einen Federspeicheranschluss zum Anschließen wenigstens eines Federspeicherbremszylinders. Hierbei ist es denkbar, dass an einen einzigen Federspeicheranschluss des elektropneumatischen Feststellbremsmoduls sämtliche Fehlerspeicherbremszylinder des Nutzfahrzeugs, insbesondere des Triebwagens einer Triebfahrzeug-Anhänger-Kombination, angeschlossen sind. Es ist auch möglich, dass hierfür separate Anschlüsse vorgesehen sind.

In der Regel nutzen derartige elektropneumatische Feststellbremsmodule ein Relaisventil, um den Federspeicheranschluss und somit die Federspeicherbremszylinder mit einem Volumenstrom zu versorgen.

Ein solches elektropneumatischen Feststellbremsmodul ist beispielsweise in DE 10 336 611 A1 offenbart. Das Relaisventil ist mit einer Vorsteuereinheit gekoppelt, die über ein elektrisch geschaltetes 2/2-Wegeventil und ein Bistabiles 3/2-Wegeventil einen Steuereingang des Relaisventils mit dem Vorratsanschluss verbindet. Das elektrisch gesteuerte 2/2-Wegeventil dient zum gepulsten Entlüften des Steuereingangs, um die Federspeicher auch zum Hilfs-bremsen oder zusätzlichem Einbremsen zu verwenden. Das bistabile 3/2-Wegeventil dient dazu einen be- oder entlüfteten Zustand des Steuereingangs des Relaisventils aufrecht zu erhalten, um den Zustand der Federspeicherbremszylinder aufrecht zu erhalten. Im Fahrbetrieb soll permanent ein Druck an dem Federspeicheranschluss ausgesteuert werden, sodass die Federspeicherbremszylinder gelöst sind. Im abgestellten Zustand des Fahrzeugs allerdings, sollen die Federspeicherbremszylinder zugespannt sein, das heißt entlüftet.

Es besteht der Bedarf, elektropneumatische Feststellbremsmodule bereit zu stellen, die kein Relaisventil aufweisen. Relaisventile sind in der Regel aufwendig in der Fertigung, als auch im Platzbedarf und daher ist es wünschenswert, auf diese verzichten zu können.

Ein elektropneumatisches Feststellbremsmodul ohne Relaisventil ist in EP 2 129 562 B1 offenbart. Die dort offenbarte Vorrichtung nutzt einzig ein tristabiles Magnetventil, welches ein direktes Verbinden des Vorratsanschlusses mit dem Anschluss für die Federspeicherbremszylinder erlaubt. Allerdings sind derartige tristabile Magnetventile äußerst komplex und sehr großbauend, sodass auch hier der Bedarf besteht eine einfachere Lösung bereit zu stellen.

Aus EP 2 939 892 A1 ist ferner ein elektropneumatisches Feststellbremsmodul bekannt, dass eine elektrisch ansteuerbare Ventileinrichtung nutzt, die ausgehend von dem Vorratsanschluss eine Verzweigung zwischen einer pneumatischen Leitung für die Feststellbremszylinder, und eine pneumatische Leitung für den Anschluss eines Anhängersteuerventils (TCV) aufweist. An die pneumatische Leitung für die Federspeicherbremszylinder ist ein Steuerventil angeschlossen, welches als 3/2-Wegeventil ausgebildet ist und sowohl einen pneumatischen als auch einen elektrischen Steuereingang aufweist. EP 2 939 892 A1 verzichtet damit auf eine Vorsteuereinheit. Allerdings sind auch solche doppeltwirkenden Ventile, die sowohl einen pneumatischen als auch einen elektrische Steuereingang aufweisen ebenfalls aufwendig und eine einfachere Lösung ist weiterhin gewünscht.

Aus dem Bereich der Betriebsbremsen ist die DE 10 2014 006 614 A1 bekannt. Dort ist eine pneumatische Bremseinrichtung für Kraftfahrzeuge offenbart, die einen Bremssignalgeber, einen Vorratsdruckspeicher und eine pneumatisch betätigbare Radbremse pro Rad hat sowie wenigstens eine Achse des Kraftfahrzeugs mit jeweils einem elektrisch ansteuerbaren Radbremsmodul pro Rad zur Einstellung eines Soll-Bremsdrucks der jeweiligen Radbremse. Eine elektronische Steuereinheit ermittelt Vorgabewerte der Soll-Bremsdrücke der Radbremsen unter Berücksichtigung des Bremssignalgebers. Jedes Radbremsmodul umfasst wenigstens ein Belüftungsventil und ein Entlüftungsventil, elektrisch betätigbare Aktivierungsmittel zur Aktivierung des Belüftungsventils und/oder des Entlüftungsventils, sowie eine Steuerlogik mit Mitteln zu Erzeugung eines Stellsignals für das Aktivierungsmittel entsprechend dem Vorgabewert für den Soll-Bremsdruck. Um die Herstellungskosten und die Baugröße der pneumatischen Bremseinrichtung zu verringern schlägt DE 10 2014 006 614 vor, dass das Belüftungsventil und sein Aktivierungsmittel derart ausgebildet sind, dass der pneumatische Druck aus dem Vorratsdruckspeicher im betätigten Zustand des Belüftungsventils direkt an die jeweilige Radbremse durchsteuerbar ist und/oder das Entlüftungsventil den Bremsdruck der Radbremse im betätigten Zustand direkt in die Atmosphäre entlüftet.

Die WO 2008/122382 A1 offenbart eine Feststellbremseinrichtung eines Fahrzeugs mit Notlösefunktion. Zum Verbessern der Lösbarkeit der Feststellbremse im Notlösefall ist ein Entlüftungsanschluss einer zweiten, zum Belüften eines Federspeicherbremszylinders im Notlösefall vorgesehenen Steuerventileinrichtung mit einer Druckluftleitung verbunden, die an einem äußeren Bereich des Fahreugs endet.

Es besteht nach wie vor Bedarf ein elektropneumatisches Feststellbremsmodul in der eingangs genannten Art anzugeben, welches einen einfachen Aufbau hat, auf ein Relaisventil verzichtet und ein sicheres Aufrechterhalten des Zustands am Federspeicheranschluss erlaubt.

Die Erfindung löst die Aufgabe durch ein elektropneumatisches Feststellbremsmodul mit den Merkmalen des Anspruchs 1. Das elektropneumatische Feststellbremsmodul weist einen Vorratsanschluss zum Anschließen eines Druckluftvorrats, wenigstens einen Federspeicheranschluss zum Anschließen wenigstens eines Federspeicherbremszylinders, eine Einlass-Auslass-Ventileinheit, die wenigstens eine erste Schaltstellung und eine zweite Schaltstellung einnehmen kann, sowie eine elektropneumatische Vorsteuereinheit zum Aussteuern wenigstens eines ersten Steuerdrucks an der Einlass-Auslass-Ventileinheit auf. Dabei ist vorgesehen, dass in der ersten Schaltstellung der Einlass-Auslass-Ventileinheit der Federspeicheranschluss mit dem Vorratsanschluss zum Aussteuern eines Federspeicherbremsdrucks verbunden ist und in der zweiten Schaltstellung der Einlass-Auslass-Ventileinheit der Federspeicheranschluss mit einem Entlüftungsanschluss der Einlass-Auslass-Ventileinheit verbunden ist, wobei die Einlass-Auslass-Ventileinheit wenigstens ein erstes 3/2-Wegeventil mit genau zwei Schaltstellungen aufweist, und wobei die Einlass-Auslass-Ventileinheit in der zweiten Schaltstellung ist, wenn der erste Steuerdruck unterhalb eines ersten Grenzwerts liegt.

Auf diese Weise ist ein elektropneumatisches Feststellbremsmodul erreicht, welches kein Relaisventil benötigt und mit üblichen einfachen Ventilen auskommt. Vorzugsweise ist die Einlass-Auslass-Ventileinheit rein pneumatisch gesteuert, während die Vorsteuereinheit elektromagnetisch gesteuert ist. Die Vorsteuereinheit als solche kann insgesamt wie in DE 10 2014 006 614 A1 beschrieben ausgebildet sein. Die Vorsteuereinheit dient also dazu den ersten Steuerdruck auszusteuern, wobei die Einlass-Auslass-Ventileinheit in Abhängigkeit des ersten Steuerdrucks den Federspeicheranschluss mit einem Volumen versorgt, oder entlüftet. Dabei werden die zwei definierten Schaltstellungen des 3/2-Wege-Ventils genutzt. Das 3/2-Wegeventil dient vorzugsweise sowohl zur Be- als auch zur Entlüftung des Federspeicheranschlusses. Erfindungsgemäß ist dabei ferner vorgesehen, dass die Einlass-Auslass-Ventileinheit in der zweiten Schaltstellung ist, wenn der erste Steuerdruck unterhalb eines ersten Grenzwerts liegt. Der Grenzwert ist vorbestimmt und baulich durch die Einlass-Auslass-Ventileinheit vorgegeben. Ein typischer Grenzwert liegt im Bereich von 0,25 MPa, ist allerdings frei vorgebbar und nach den jeweiligen Bedürfnissen des Bremssystems, in welchem das elektropneumatische Feststellbremsmodul eingesetzt werden soll, wählbar. Auf diese Weise ist sichergestellt, dass wenn kein erster Steuerdruck ausgesteuert werden kann, dieser also unterhalb des ersten Grenzwerts liegt, der Federspeicheranschluss entlüftet ist und die Federspeicherbremszylinder somit zugespannt werden. Dies ist insbesondere dann vorteilhaft, wenn die Vorsteuereinheit so ausgebildet ist, dass sie stromlos keinen ersten Steuerdruck aussteuert.

Vorzugsweise ist in der ersten Schaltstellung der Einlass-Auslass-Ventileinheit der Federspeicherbremsdruck direkt von dem Vorratsanschluss an den Federspeicheranschluss durchsteuerbar. Unter einem direkten Durchsteuern wird vorliegend das Herstellen einer Volumenverbindung zwischen dem Vorratsanschluss und dem Federspeicheranschluss verstanden, ohne Zwischenschaltung eines Relaisventils. Es wird also von der Einlass-Auslass-Ventileinheit nicht nur ein Steuerdruck ausgesteuert, sondern direkt ein Volumenstrom zum Belüften des Federspeicheranschlusses bereitgestellt.

In einer bevorzugten Ausführungsform ist vorgesehen, dass die Einlass-Auslass-Ventileinheit wenigstens ein 2/2-Wege-Sperrventil auf. Das 2/2-Wege-Sperrventil dient vorzugsweise zur gestuften Be- oder Entlüftung des Federspeicheranschlusses. Durch ein gestuftes Entlüften des Federspeicheranschlusses lassen sich die Federspeicherbremszylinder gestuft einbremsen und so zum zusätzlichen Abbremsen, oder Hilfsbremsen des Fahrzeugs verwenden. Aus diesem Grund ist das 2/2-Wege-Sperrventil nur optional.

Das erste 3/2-Wegeventil ist vorzugsweise pneumatisch gesteuert. Die Vorsteuereinheit ist vorzugsweise dazu ausgebildet den ersten Steuerdruck an dem ersten 3/2-Wegeventil bereitzustellen. Vorzugsweise ist auch das 2/2-Wege-Sperrventil pneumatisch gesteuert. In einer Alternative ist das 2/2-Wege-Sperrventil elektromagnetisch ausgebildet. Für den Fall, dass das 2/2-Wege-Sperrventil pneumatisch gesteuert ausgebildet ist, ist vorzugsweise vorgesehen, dass die Vorsteuereinheit einen zweiten Steuerdruck an dem 2/2-Wege-Sperrventil bereitstellt.

In einer bevorzugten Weiterbildung weist das erste 3/2-Wegeventil einen Einlassanschluss, einen Arbeitsanschluss und einen Entlüftungsanschluss auf und das erste 3/2-Wegeventil ist dazu ausgebildet, wechselseitig den Arbeitsanschluss mit dem Einlassanschluss und dem Entlüftungsanschluss zu Verbinden. An dem Eingangsanschluss ist vorzugsweise ein Vorratsdruck aussteuerbar. Vorzugsweise ist der Eingangsanschluss mit dem Vorratsanschluss verbunden.

In einer bevorzugten Weiterbildung ist zwischen dem Vorratsanschluss und dem Eingangsanschluss ein Rückschlagventil, zum Verhindern eines Rückströmens von dem Federspeicheranschluss zum Vorratsanschluss angeordnet. Hierdurch ist es möglich, einen Steuerdruck, insbesondere den ersten Steuerdruck, aufrecht zu erhalten auch dann wenn der Druck am Vorratsanschluss abnimmt, beispielsweise aufgrund eines Fehlers in der Druckluftversorgung, die zu einem abfallen des Drucks im Druckluftvorrat führt.

Wird allerdings kein Rückschlagventil verwendet, ist es möglich trotz Anliegen des ersten Steuerdrucks ein Zuspannen der Federspeicherbremszylinder zu erreichen, indem der entsprechende Bremskreis heruntergepumpt wird, das heißt der Druck im Druckluftvorrat verringert wird und somit der anliegende Vorratsdruck verringert wird. In diesem Fall wird auch dann, wenn der Federspeicheranschluss direkt mit dem Vorratsanschluss verbunden ist, durch geöffnete Ventile der Federspeicheranschluss über ein Herunterpumpen des Vorratsanschlusses entlüftet und somit die Federspeicherbremszylinder zugespannt.

Weiterhin ist bevorzugt, das das 2/2-Wege-Sperrventil einen ersten Sperrventilanschluss und einen zweiten Sperrventilanschluss aufweist, wobei der erste Sperrventilanschluss mit dem Arbeitsanschluss des ersten 3/2-Wegeventils, und der zweite Sperrventilanschluss mit dem Federspeicheranschluss verbunden ist. Das 2/2-Wege-Sperrventil ist also zwischen das erste 3/2-Wegeventil und den Federspeicheranschluss geschaltet. Zum gestuften Be- und Entlüften kann dann das erste 3/2-Wegeventil in eine Stellung gebracht werden, die den Federspeicheranschluss mit einer Be- oder Entlüftung verbindet und durch gepulstes Betätigen des 2/2-Wege-Sperrventils diese Verbindung hergestellt wird. Das 2/2-Wege-Sperrventil ist vorzugsweise als pneumatisch gesteuertes 2/2-Wege-Sperrventil ausgebildet, wobei es in der offenen Schaltstellung ist, wenn der zweite Steuerdruck einen zweiten Grenzwert unterschreitet.

In einer bevorzugten Weiterbildung weist die elektropneumatische Vorsteuereinheit wenigstens ein zweites 3/2-Wegeventil auf, wobei das zweite 3/2-Wegeventil zum Aussteuern des ersten Steuerdrucks vorgesehen ist. Das zweite 3/2-Wegeventil ist dazu vorzugsweise zwischen einer ersten und einer zweiten Schaltstellung schaltbar, wobei in der ersten Schaltstellung kein Steuerdruck ausgesteuert wird, das heißt der entsprechende Eingang der Einlass-Auslass-Ventileinheit für den ersten Steuerdruck mit einer Entlüftung verbunden ist, und in einer zweiten Schaltstellung der erste Steuerdruck ausgesteuert wird, das heißt der entsprechenden Eingang der Einlass-Auslass-Ventileinheit mit dem Vorratsanschluss verbunden wird.

In einer bevorzugten Ausführungsform ist das zweite 3/2-Wegeventil als Bistabilventil ausgebildet. Beim Bistabilventil sind sowohl die erste, als auch die zweite Schaltstellung jeweils stromlos stabil und werden vorzugsweise durch ein Permanentmagneten gehalten. Ein solches Bistabilventil fällt bei Wegfall einer Spannung bzw. Stroms nicht federbelastet in eine Schaltstellung zurück, sondern verharrt in der zuletzt eingenommenen Schaltstellung aufgrund der Permanentmagnete. Durch ein solches Bistabilventil lässt sich also eine eingenommene Schaltstellung aufrechterhalten, auch stromlos, und somit lässt sich der ausgesteuerte erste Steuerdruck stromlos aufrechterhalten.

Vorzugsweise weist das Bistabilventil einen ersten Bistabilventilanschluss, einen zweiten Bistabilventilanschluss und einen dritten Bistabilventilanschluss auf, wobei der erste Bistabilventilanschluss mit dem Vorratsanschluss verbunden ist, der zweite Bistabilventilanschluss den ersten Steuerdruck aussteuert und der dritte Bistabilventilanschluss mit einer Entlüftung verbunden ist. Vorzugsweise ist der zweite Bistabilventilanschluss mit einem ersten Steuereingang des ersten 3/2-Wegeventils verbunden.

In weiteren Ausführungsformen der Erfindung ist es auch möglich, das Bistabilventil durch eine Kombination von monostabilen Schaltventilen sowie eine pneumatischen Selbsthaltung zu kombinieren, um die Aufrechterhaltung des ausgesteuerten ersten Steuerdrucks zu gewährleisten.

Insofern ist in einer weiteren Ausführungsform vorgesehen, dass die elektropneumatische Vorsteuereinheit eine monostabile Einlass-Auslass-Ventilkombination mit einem Einlassventil und einem Auslassventil zum Aussteuern des ersten Steuerdrucks aufweist. Mittels der monostabilen Einlass-Auslass-Ventilkombination ist durch Bereitstellen entsprechender Schaltsignale zunächst der erste Steuerdruck aussteuerbar. Um diesen dann stromlos aufrechtzuerhalten, ist vorzugsweise eine Rückführleitung vorgesehen, die den von dem ersten 3/2-Wegeventil ausgesteuerten Druck als ersten Steuerdruck an der Einlass-Auslass-Ventileinheit bereitstellt. Sobald mittels der monostabilen Einlass-Auslass-Ventilkombination der erste Steuerdruck ausgesteuert wird, schaltet das erste 3/2-Wegeventil bei Überschreiten des entsprechenden Schwellwerts und steuert einen Druck aus. Durch Rückführung des ausgesteuerten Drucks als ersten Steuerdruck kann die so erreichte Schaltstellung des 3/2-Wegeventils aufrechterhalten und eine Selbsthaltung erzielt werden. Ein Bistabilventil ist in dieser Variante nicht mehr notwendig, wodurch die Kosten und auch der Bauraum für das elektropneumatische Feststellbremsmodul reduziert werden können.

Vorzugsweise wird der von dem 3/2-Wegeventil ausgesteuerte Druck als erster Steuerdruck gedrosselt an der Einlass-Auslass-Ventileinheit bereitgestellt. Vorzugsweise weist die Rückführleitung hierzu eine Drossel auf.

In einer ersten Variante weist das Einlassventil hierbei einen mit dem Vorratsanschluss verbundenen ersten Einlassventilanschluss und einen mit der Einlass-Auslass-Ventileinheit verbundenen zweiten Einlassventilanschluss auf, wobei durch Schalten des Einlassventils der erste Steuerdruck an dem zweiten Einlassventilanschluss aussteuerbar ist. Der zweite Einlassventilanschluss ist vorzugsweise über eine erste pneumatische Steuerleitung mit dem ersten 3/2-Wegeventil, genauer gesagt mit dem ersten Steuereingang des ersten 3/2-Wegeventils, verbunden. Das Einlassventil kann hierbei entweder als 2/2-Wegeventil oder als 3/2-Wegeventil ausgebildet sein. Vorzugsweise ist es als 2/2-Wegeventil ausgebildet und stromlos in der ersten, geschlossenen Schaltstellung.

Weiterhin ist bevorzugt, dass das Auslassventil einen mit der Einlass-Auslass-Ventileinheit verbundenen ersten Auslassventilanschluss und einen mit einer Entlüftung verbundenen zweiten Auslassventilanschluss zum Entlüften des ersten Steuerdrucks aufweist. Um das erste 3/2-Wegeventil wieder in die Entlüftungsstellung zu bringen, sodass kein Federspeicherbremsdruck ausgesteuert wird, ist es erforderlich, den ersten Steuereingang des ersten 3/2-Wegeventils zu entlüften. Hierzu dient das Auslassventil, das gemäß dieser Ausführungsform als 2/2-Wegeventil oder als 3/2-Wegeventil ausgebildet sein kann. Das Auslassventil ist vorzugsweise stromlos in einer geschlossenen Schaltstellung, wenn es als 2/2-Wegeventil ausgebildet ist. Der erste Auslassventilanschluss kann mit derselben ersten pneumatischen Steuerleitung verbunden sein wie das Einlassventil. Hierzu kann eine Verzweigung oder Abzweigleitung vorgesehen sein.

In einer bevorzugten Weiterbildung ist die Rückführleitung direkt mit der Einlass-Auslass-Ventileinheit verbunden. Dies ist besonders dann vorteilhaft, wenn sowohl das Einlassventil als auch das Auslassventil als 2/2-Wegeventile ausgebildet sind. Die Rückführleitung zweigt in dieser Variante folglich direkt von der zweiten pneumatischen Leitung, die mit dem Arbeitsanschluss des ersten 3/2-Wegeventils verbunden ist, ab und führt direkt zum ersten Steuereingang des ersten 3/2-Wegeventils. Sie kann hierzu in die erste pneumatische Steuerleitung münden. In dieser Variante wird der von dem ersten 3/2-Wegeventil ausgesteuerte Druck direkt und ohne Zwischenschaltung eines Ventils an dem ersten Steuereingang des ersten 3/2-Wegeventils unabhängig von der Schaltstellung des Einlassventils oder des Auslassventils bereitgestellt. Ein Aussperren des rückgeführten Drucks ist hierbei nicht möglich. Um den rückgeführten Druck aussperren zu können, ist entweder ein weiteres Ventil notwendig, oder das Einlass- oder Auslassventil ist als 3/2-Wegeventil auszubilden.

Demnach ist in einer weiteren Variante vorgesehen, dass das Einlassventil einen mit der Rückführleitung verbundenen dritten Einlassventilanschluss aufweist, wobei in einer ersten Schaltstellung des Einlassventils der zweite Einlassventilanschluss mit dem ersten Einlassventilanschluss verbunden ist, und in einer zweiten Schaltstellung des Einlassventils der zweite Einlassventilanschluss mit dem dritten Einlassventilanschluss verbunden ist. In dieser Ausführungsform ist das Einlassventil als 3/2-Wege-Schaltventil ausgebildet. Vorzugsweise ist das als 3/2-Wegeventil ausgebildete Einlassventil stromlos in der zweiten Schaltstellung, sodass stromlos der rückgeführte Druck als erster Steuerdruck an dem ersten Steuereingang des ersten 3/2-Wegeventils bereitgestellt wird. So wird stromlos eine Selbsthaltung des ersten 3/2-Wegeventils erreicht.

Alternativ hierzu ist es auch möglich, das Auslassventil als 3/2-Wegeventil auszubilden. In dieser Variante weist das Auslassventil einen mit der Rückführleitung verbundenen dritten Auslassventilanschluss auf, wobei in einer ersten Schaltstellung des Auslassventils der erste Auslassventilanschluss mit dem dritten Auslassventilanschluss verbunden ist und in einer zweiten Schaltstellung des Auslassventils der erste Auslassventilanschluss mit dem zweiten Auslassventilanschluss verbunden ist. Vorzugsweise ist das Auslassventil stromlos in der ersten Schaltstellung, sodass stromlos der von dem ersten 3/2-Wegeventil ausgesteuerte Druck über die Rückführleitung rückgeführt wird und als erster Steuerdruck an dem ersten Steuereingang des ersten 3/2-Wege-ventils ausgesteuert wird. Auf diese Weise wird auch stromlos eine Selbsthaltung erreicht.

In der weiteren bevorzugten Ausführungsform weist die elektropneumatische Vorsteuereinheit wenigstens ein drittes 3/2-Wegeventil zum Aussteuern eines zweiten Steuerdrucks auf. Zu diesem Zweck weist das dritte 3/2-Wegeventil einen Einlassanschluss, einen Arbeitsanschluss und einen Entlüftungsanschluss auf, und das dritte 3/2-Wegeventil ist dazu ausgebildet, wechselseitig den Arbeitsanschluss mit dem Einlassanschluss und dem Entlüftungsanschluss zu verbinden. Das dritte 3/2-Wegeventil ist vorzugsweise als elektronisch geschaltetes Ventil ausgebildet. In einer ersten Schaltstellung ist vorzugsweise der Eingangsanschluss mit dem Arbeitsanschluss verbunden und in einer zweiten Schaltstellung ist der Entlüftungsanschluss mit dem Arbeitsanschluss verbunden. Das dritte 3/2-Wegeventil ist vorzugsweise stromlos in der zweiten Schaltstellung.

Weiterhin ist bevorzugt, dass der Einlassanschluss des dritten 3/2-Wegeventils mit dem Vorratsanschluss, der Arbeitsanschluss des dritten 3/2-Wegenventils mit einem zweiten Steuereingang des 2/2-Wege-Sperrventils und der Entlüftungsanschluss des dritten 3/2-Wegeventils mit einer Entlüftung verbunden ist. In diesem Fall wird stromlos kein zweiter Steuerdruck ausgesteuert und bevorzugt ist dass 2/2-Wege-Sperrventil in der offenen Schaltstellung, wenn der zweite Steuerdruck den zweiten Grenzwert unterschreitet. Als zweiter Grenzwert kommt wiederum ein Druck im Bereich von etwa 0,25 MPa in Frage, wobei auch hier andere Grenzwerte genutzt werden können.

Um also einem Anhängersteuerventil (TCV) einen Steuerdruck zu übergeben, der dem Federspeicherbremsdruck am Federspeicheranschluss entspricht, weist das elektropneumatische Feststellbrems-Modul gemäß dieser Ausführungsform den Anhängersteuerventilanschluss auf.

Vorzugsweise weist das elektropneumatische Feststellbremsmodul einen Anhängerventil auf, das mit dem Anhängersteuerventilanschluss verbunden ist und das dazu vorgesehen ist, in einer ersten Schaltstellung wenigstens den Federspeicherbremsdruck als Anhängersteuerdruck an dem Anhängersteueranschluss auszusteuern. Alternativ ist es auch möglich einen anderen, äquivalenten Druck, an dem Anhängersteuerventilanschluss auszusteuern.

Vorzugsweise wird der Federspeicherbremsdruck direkt an dem Anhängersteuerventilanschluss bereitgestellt, das heißt ohne Invertierung. Das am Anhängersteuerventilanschluss angeschlossene Anhängersteuerventil (TCV) muss den ausgesteuerten Druck dann invertieren, um einen entsprechenden Betriebsbremsdruck an den Betriebsbremsen des Anhängers bereit zu stellen.

Das Anhängerventil weist vorzugsweise eine zweite Schaltstellung auf, die zum Ausführen einer Anhängerkontrollstellungsfunktion vorgesehen ist. In der Anhängerkontrollstellung wird in der europäischen Anhängersteuerung überprüft, ob die Anhängerzugfahrzeugkombination auch ohne eingelegte Betriebsbremsen des Anhängers nur aufgrund der Federspeicherbremszylinder des Zugfahrzeugs sicher steht. Um diesen Zustand zu erreichen ist es folglich erforderlich einen Druck an dem Anhängersteuerventilanschluss auszusteuern, wenn der Federspeicheranschluss entlüftet ist. Das an den Anhängersteuerventilanschluss angeschlossene Anhängersteuerventil invertiert den ausgesteuerten Druck und lässt so die Betriebsbremsen des Anhängers drucklos, das heiß in einem offenen Zustand. Die Anhängerkontrollstellungsfunktion wird nur temporär ausgeführt und in der Regel von einer Fahrzeugkabine aus angesteuert. Der Fahrzeugführer betätigt die Anhängerkontrollstellungsfunktion um das sichere Stehen der Zugfahrzeuganhängerkombination zu überprüfen. Wenn festgestellt wird, dass die Zugfahrzeuganhängerkombination sicher steht, wird die Anhängerkontrollstellungsfunktion beendet und entsprechend das Anhängerventil in die erste Schaltstellung verbracht, sodass an dem Anhängersteuerventilanschluss wiederum der Federspeicherbremsdruck als Anhängersteuerdruck ausgesteuert wird.

In einer weiteren bevorzugten Ausführungsform ist das Anhängerventil als viertes 3/2-Wegeventil ausgebildet und weist einen ersten Anhängerventilanschluss, einen zweiten Anhängerventilanschluss und einen dritten Anhängerventilanschluss auf, wobei der erste Anhängerventilanschluss mit dem Vorratsanschluss, der zweite Anhängerventilanschluss mit dem Anhängersteuerventilanschluss und der dritte Anhängerventilanschluss mit einer Abzweigleitung verbunden ist, die von einer mit dem Federspeicheranschluss verbundenen Federspeicherbremsdruckleitung abzweigt.

Ferner ist bevorzugt, dass das Anhängerventil in einer stromlosen Stellung in der ersten Schaltstellung oder der zweiten Schaltstellung ist. Für den Fall, dass das Anhängerventil stromlos in der ersten Schaltstellung ist, ist das elektropneumatische Feststellbremsmodul für die europäische Anhängersteuerung ausgebildet. Für den Fall, dass das Anhängerventil stromlos in der zweiten Schaltstellung ist, ist das elektropneumatische Feststellbremsmodul für die skandinavische Anhängersteuerung ausgebildet. In der zweiten Variante wird stromlos der Vorratsdruck am Anhängersteuerventilanschluss ausgesteuert, sodass stromlos die Betriebsbremsen des Anhängers nicht eingebremst werden.

Weiterhin ist bevorzugt, dass das elektropneumatische Feststellbremsmodul eine elektrische Steuereinheit mit einem elektrischem Anschluss zum Empfang von Feststellbremssignalen und zum bereitstellen entsprechender Schaltsignale wenigstens an die Vorsteuereinheit aufweist. Der elektrische Anschluss zum Empfang von Feststellbremssignalen kann beispielsweise mit einem Fahrzeugbus verbunden sein, oder direkt über eine Verkabelung mit einem Parkbremsschalter bzw. Handbremsschalter in einer Fahrerkabine des Fahrzeugs.

Ferner ist bevorzugt, dass das elektropneumatische Feststellbremsmodul einen Drucksensor aufweist, der dazu vorgesehen ist, den Federspeicherbremsdruck zu erfassen und ein entsprechendes Signal bereit zu stellen. Vorzugsweise stellt der Drucksensor das Signal an der elektrischen Steuereinheit bereit. Die elektrische Steuereinheit kann das Signal an einen Fahrzeugbus oder dergleichen übergeben, oder selbstständig Verarbeiten. Über das von dem Drucksensor erfasste Signal kann ermittelt werden, ob die Federspeicherbremszylinder zugespannt oder offen sind.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet. Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
Fig. 1 Ein Blockschaltbild eines elektropneumatischen Feststellbremsmoduls gemäß einem ersten Ausführungsbeispiel;
Fig. 2 ein Blockschaltbild eines elektropneumatischen Feststellbremsmoduls gemäß einem zweiten Ausführungsbeispiel;
Fig. 3 ein Blockschaltbild eines elektropneumatischen Feststellbremsmoduls gemäß einem dritten Ausführungsbeispiel;
Fig. 4 ein Blockschaltbild eines elektropneumatischen Feststellbremsmoduls gemäß einem vierten Ausführungsbeispiel;
Fig. 5 ein Blockschaltbild eines elektropneumatischen Feststellbremsmoduls gemäß einem fünften Ausführungsbeispiel;
Fig. 6 ein Blockschaltbild eines elektropneumatischen Feststellbremsmoduls gemäß einem sechsten Ausführungsbeispiel; und
Fig. 7 ein Blockschaltbild eines elektropneumatischen Feststellbremsmoduls gemäß einem siebten Ausführungsbeispiel.

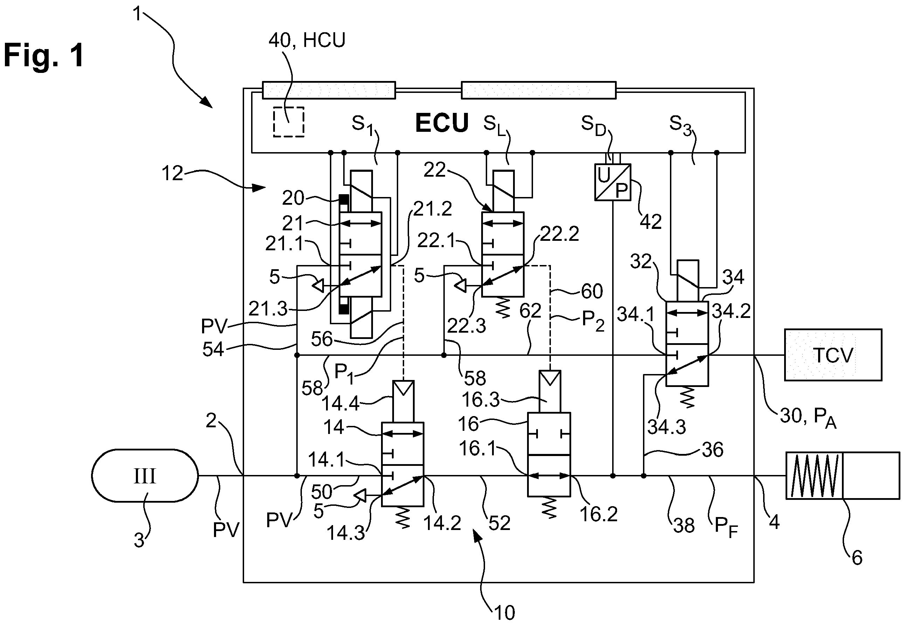

Ein elektropneumatisches Feststellbremsmodul 1 (Fig. 1) weist gemäß der Erfindung einen Vorratsanschluss 2 auf, an den ein Druckluftvorrat 3 angeschlossen ist. Der Druckluftvorrat 3 ist Teil eines Bremssystems eines Nutzfahrzeugs, das hier nicht weiter dargestellt ist. Insbesondere ist der Druckluftvorrat 3 Teil eines Feststellbremskreises.

Weiterhin weist das elektropneumatische Feststellbremsmodul 1 einen Federspeicheranschluss 4 auf, an den gemäß diesem Ausführungsbeispiel ein Federspeicherbremszylinder 6 angeschlossen ist. Es soll verstanden werden, dass es ebenso möglich ist zwei oder mehr, insbesondere vier oder mehr Federspeicherbremszylinder an den Federspeicheranschluss 4 anzuschließen.

Über den Vorratsanschluss 2 wird ein Vorratsdruck pV an dem elektropneumatischen Feststellbremsmodul 1 bereitgestellt und über den Federspeicheranschluss 4 wird ein Federspeicherbremsdruck pF an den Federspeicheranschluss 4 bereitgestellt. Die Federspeicher 6 sind dabei so ausgebildet, dass sie aufgrund einer Federkraft zuspannen, sodass ein positiver Federspeicherbremsdruck pF notwendig ist, um die Federspeicherbremszylinder 6 zu lösen. Bei Wegfall des Federspeicherbremsdrucks pF oder unterschreiten von einem Schwellwert, spannen die Federspeicherbremszylinder teilweise oder vollständig zu.

Um ausgehend vom Vorratsanschluss 2 den Federspeicherbremsdruck pF an dem Federspeicheranschluss 4 auszusteuern, weist das elektropneumatische Feststellbremsmodul 1 eine Einlass-Auslass-Ventileinheit 10 und eine elektropneumatische Vorsteuereinheit 12 auf. Die Einlass-Auslass-Ventileinheit 10 ist so schaltbar, dass der Federspeicherbremsdruck pF direkt von dem Vorratsanschluss 2 an den Federspeicheranschluss 4 durchsteuerbar ist. Dies wird im Weiteren noch detaillierter beschrieben werden. Dazu ist in einer Schaltstellung der Einlass-Auslass-Ventileinheit 10 der Federspeicheranschluss 4 direkt mit dem Vorratsanschluss 2 verbunden. In einer zweiten Schaltstellung der Einlass-Auslass-Ventileinheit 10 ist der Federspeicheranschluss 4 hingegen mit einer Entlüftung 5 verbunden um ein Zuspannen der Federspeicherbremszylinder 6 zu erlauben.

Die Einlass-Auslass-Ventileinheit 10 ist pneumatisch gesteuert und basierend auf einem ersten Steuerdruck p1 schaltbar. Sofern der erste Steuerdruck p1 unter einem ersten vorbestimmten Grenzwert liegt, beispielsweise 0,25 MPa, schaltet die Einlass-Auslass-Ventileinheit in die zweite Schaltstellung, in der der Federspeicheranschluss 4 entlüftbar ist, und so die Federspeicherbremszylinder 6 zugespannt werden.

Im Einzelnen weist die Einlass-Auslass-Ventileinheit 10 hierzu zunächst ein erstes 3/2-Wegeventil 14 auf, das pneumatisch Steuerbar ist und einen Einlassanschluss 14.1, einen Arbeitsanschluss 14.2, einen Entlüftungsanschluss 14.3 und einen ersten Steuereingang 14.4 aufweist. Der Einlassanschluss 14.1 des ersten 3/2-Wegeventils 14 ist über eine erste pneumatische Leitung 50 mit dem Vorratsanschluss 2 verbunden. Der Entlüftungsanschluss 14.3 des ersten 3/2-Wegeventils 14 ist mit einer Entlüftung 5 verbunden, die eine Zentrale Entlüftung 5 des elektropneumatischen Feststellbremsmoduls 1 sein kann. Der Arbeitsanschluss 14.2 des ersten 3/2-Wegeventils 14 ist mit einer pneumatischen Leitung 52 verbunden. Das erste 3/2-Wegeventil 14 weist eine erste in Fig. 1 nicht eingenommene Schaltstellung auf, in der der Einlassanschluss 14.1 des ersten 3/2-Wegeventils 14 mit dem Arbeitsanschluss 14.2 des ersten 3/2-Wegeventils 14 verbunden ist. Ferner weist das erste 3/2-Wegeventil 14 eine zweite Schaltstellung auf, die in der Fig. 1 eingenommen ist, und in der der Entlüftungsanschluss 14.3 des ersten 3/2-Wegeventils mit dem Arbeitsanschluss 14.2 des ersten 3/2-Wegeventils 14 verbunden ist. In dieser zweiten Schalterstellung ist der Arbeitsanschluss 14.2 des ersten 3/2-Wegeventils 14 und somit auch die pneumatische Leitung 52 entlüftbar. Das erste 3/2-Wegeventil 14 ist in die zweite Schaltstellung federbelastet vorgespannt. Durch entsprechende Anlage des ersten Steuerdrucks p1 an dem ersten Steuereingang 14.4 des ersten 3/2-Wegeventils 14 kann das erste 3/2-Wegeventil 14 in die erste, nicht gezeigte, Schaltstellung überführt werden, um in der pneumatischen Leitung 52 den Vorratsdruck pV auszusteuern.

In dem in Fig. 1 gezeigten Ausführungsbespiel ist die zweite pneumatische Leitung 52 mit einem ersten Sperrventilanschluss 16.1 eines 2/2-Wege-Sperrventils 16 verbunden. Der zweite Sperrventilanschluss 16.2 des 2/2-Wege-Sperrventils 16 ist mit einer Federspeicherbremsdruckleitung 38 verbunden, die ihrerseits mit dem Federspeicheranschluss 4 verbunden ist. Das heißt der Arbeitsanschluss 14.2 des ersten 3/2-Wegeventils 14 ist letztlich mit dem Federspeicheranschluss 4 verbunden, wenn das 2/2-Wege-Sperrventil 16 in der in Fig. 1 gezeigten offenen Schaltstellung ist. Das 2/2-Wege-Sperrventil 16 ist der Teil der Einlass-Auslass-Ventileinheit 10 und ebenso wie das erste 3/2-Wegeventil 14 pneumatisch gesteuert. Das 2/2-Wege-Sperrventil 16 ist federbelastet in die in Fig. 1 gezeigte zweite offene Schaltstellung vorgespannt. Das 2/2-Wege-Sperrventil 16 weist einen zweiten Steueranschluss 16.3 auf an dem ein zweiter Steuerdruck p2 aussteuerbar ist.

Es soll verstanden werden, dass es auch Ausführungsformen gemäß der Erfindung geben kann, die kein 2/2-Wege-Sperrventil 16 nutzen, sondern bei denen vielmehr die Federspeicherbremsdruckleitung 38 direkt an den Arbeitsanschluss 14.2 des ersten 3/2-Wegeventils angeschlossen ist.

Das 2/2-Wege-Sperrventil 16 dient in erster Linie dem gestuften Be- und Entlüften des Federspeicheranschlusses 4. Ist das erste 3/2-Wegeventil 14 in der in Fig. 1 gezeigten zweiten Schaltstellung, ist der erste Sperrventilanschluss 16.1 mit der Entlüftung 5 verbunden. Wird nun das 2/2-Wege-Sperrventil 16 in die erste in Fig. 1 nicht gezeigte Schaltstellung gebracht, wird trotz der Schaltung des ersten 3/2-Wegeventils 14 in die zweite in der Fig. 1 gezeigte Schaltstellung der Federspeicheranschluss 4 nicht entlüftet. Erst bei Schalten des 2/2-Wege-Sperrventils 16 in die zweite in Fig. 1 gezeigte Schaltstellung, würde der Federspeicheranschluss 4 entlüftet. Beispielsweise zum Hilfsbremsen kann nun das 2/2-Wege-Sperrventil 16 gepulst von der ersten in Fig. 1 nicht gezeigten Schaltstellung in die zweite in Fig. 1 gezeigte Schaltstellung verbracht werden, um den Federspeicheranschluss 4 gestuft zu entlüften und die Federspeicherbremszylinder 6 teilweise und temporär zuzuspannen.

Die elektropneumatische Vorsteuereinheit 12 dient dazu, wenigstens den ersten Steuerdruck p1 auszusteuern und an der Einlass-/Auslass-Ventileinheit 10 bereitzustellen, um die Einlass-/Auslass-Ventileinheit 10 dazu zu veranlassen, zu schalten, und einen entsprechenden Federspeicherbremsdruck pF an dem Federspeicheranschluss 4 auszusteuern. Genauer gesagt veranlasst die Vorsteuereinheit 12 durch Aussteuerung des ersten Steuerdrucks p1, das erste 3/2-Wegeventil 14 von der zweiten Schaltstellung in die erste Schaltstellung zu wechseln, wenn der ausgesteuerte erste Steuerdruck p1 den ersten vorgegebenen Grenzwert annimmt oder überschreitet. Sofern das elektropneumatische Feststellbremsmodul 1 ein 2/2-Wege-Sperrventil 16 aufweist, und sofern dieses 2/2-Wege-Sperrventil 16 pneumatisch gesteuert ausgebildet ist, ist die elektropneumatische Vorsteuereinheit 12 vorzugsweise auch dazu ausgebildet, den zweiten Steuerdruck p2 auszusteuern und an der Einlass-Auslass-Ventileinheit 10, vorzugsweise an dem zweiten Steuereingang 16.3 des 2/2-Wege-Sperrventils 16 auszusteuern.

Zu diesem Zweck weist die elektropneumatische Vorsteuereinheit 12 zunächst ein zweites 3/2-Wegeventil 20 auf, welches zum Aussteuern des ersten Steuerdrucks p1 mit dem Vorratsanschluss 2 und einer Entlüftung 5 verbunden ist. Genauer gesagt, ist das zweite 3/2-Wegeventil 20 in dieser Ausführungsform als Bistabilventil 21 ausgebildet und weist einen ersten Bistabilventilanschluss 21.1, einen zweiten Bistabilventilanschluss 21.2 und einen dritten Bistabilventilanschluss 21.3 auf. Das Bistabilventil 21 weist eine erste in Figur 1 nicht gezeigte Schaltstellung auf, in der der erste Bistabilventilanschluss 21.1 mit dem zweiten Bistabilventilanschluss 21.2 verbunden ist, und eine zweite, in Figur 1 gezeigte Schaltstellung, in der der zweite Bistabilventilanschluss 21.2 mit dem dritten Bistabilventilanschluss 21.3 verbunden ist. Der erste Bistabilventilanschluss 21.1 ist mit dem Vorratsanschluss 2 verbunden. Genauer gesagt ist der erste Bistabilventilanschluss 21.1 über eine dritte pneumatische Leitung 54 mit dem Vorratsanschluss 2 verbunden, wobei die dritte pneumatische Leitung 54 von der ersten pneumatischen Leitung 50 abzweigt. Insofern liegt an dem ersten Bistabilventilanschluss 21.1 der Vorratsdruck pV an. Der dritte Bistabilventilanschluss 21.3 ist mit einer Entlüftung 5 verbunden, die die zentrale Entlüftung des elektropneumatischen Feststellbremsmoduls 1 sein kann. Der zweite Bistabilventilanschluss 21.2 hingegen ist mit einer ersten pneumatischen Steuerleitung 56 verbunden, in die der erste pneumatische Steuerdruck p1 ausgesteuert wird. Die erste pneumatische Steuerleitung 56 ist andererseits mit dem ersten Steuereingang 14.4 des ersten 3/2-Wegeventils 14 verbunden.

Das Bistabilventil 21 ist so ausgebildet, dass es sowohl in der ersten in Figur 1 nicht gezeigten Schaltstellung als auch in der zweiten in Figur 1 gezeigten Schaltstellung stabil ist. Dies wird durch einen Permanentmagneten erreicht, der den Ventilanker entsprechend in den Schaltstellungen hält. Das heißt, das Bistabilventil 21 kann stromlos sowohl in der ersten als auch in der zweiten Schaltstellung verbleiben.

Zur Aussteuerung des zweiten Steuerdrucks p2 weist die elektropneumatische Vorsteuereinheit 12 gemäß diesem Ausführungsbeispiel ein drittes 3/2-Wegeventil 22 auf. Das dritte 3/2-Wegeventil 22 ist mit dem Vorratsanschluss 2, einer Entlüftung 5 und dem zweiten Steuereingang 16.3 des 2/2-Wege-Sperrventils 16 verbunden.

Im Einzelnen weist das dritte 3/2-Wegeventil 22 einen Einlassanschluss 22.1 einen Arbeitsanschluss 22.2 sowie einen Entlüftungsanschluss 22.3 auf. Der Einlassanschluss 22.1 des dritten 3/2-Wegeventils 22 ist mit einer vierten pneumatischen Leitung 58 verbunden. Die dritte pneumatische Leitung 58 zweigt aus der zweiten pneumatischen Leitung 54 ab. Das heißt, auch an dem Einlassanschluss 22.1 des dritten 3/2-Wegeventils 22 liegt der Vorratsdruck pV an.

Der Arbeitsanschluss 22.2 des dritten 3/2-Wegeventils 22 ist mit einer zweiten pneumatischen Steuerleitung 60 verbunden, die ihrerseits zum zweiten Steuereingang 16.3 des 2/2-Wege-Sperrventils 16 führt. An dem Arbeitsanschluss 22.2 des dritten 3/2-Wegeventils 22 wird folglich der zweite Steuerdruck p2 ausgesteuert. Der Entlüftungsanschluss 22.3 des dritten 3/2-Wegeventils 22 ist mit einer Entlüftung 5, insbesondere der zentralen gemeinsamen Entlüftung des elektropneumatischen Feststellbremsmoduls 1 verbunden.

Das elektropneumatische Feststellbremsmodul 1 weist eine elektrische Steuereinheit ECU auf. Die elektrische Steuereinheit ECU ist dazu vorgesehen, ein Stellsignal S1 an dem zweiten 3/2-Wegeventil, insbesondere Bistabilventil 21 bereitzustellen, um dieses zwischen den ersten und zweiten Schaltstellungen zu schalten. Ferner ist die elektrische Steuereinheit ECU dazu ausgebildet, ein zweites Stellsignal S2 an dem dritten 3/2-Wegeventil 22 bereitzustellen, um das dritte 3/2-Wegeventil 22 von der zweiten in Figur 1 gezeigten Schaltstellung in die erste in Figur 1 nicht gezeigten Schaltstellung zu versetzen. In der ersten in Figur 1 nicht gezeigten Schaltstellung ist der Einlassanschluss 22.1 des dritten 3/2-Wegeventils 22 mit dem Arbeitsanschluss 22.2 des dritten 3/2-Wegeventils 22 verbunden, sodass der zweite Steuerdruck p2 ausgesteuert wird und in der Folge bei Überschreiten des zweiten Grenzwerts das 2/2-Wege-Sperrventil 16 schaltet und so den zweiten Sperrventilanschluss 16.2 gegenüber dem ersten Sperrventilanschluss 16.1 absperrt.

Die elektrische Steuereinheit ECU weist ferner einen elektronischen Anschluss 40 auf, an den mindestens ein Fahrzeugbus, oder ein HCU-Schalter direkt angeschlossen sein können. Wird beispielsweise ein Fahrzeug, das das elektromagnetische Feststellbremsmodul 1 aufweist gestartet, wird vorzugsweise an dem elektronischen Anschluss 40 ein Signal bereitgestellt, dass die Federspeicherbremszylinder 6 gelöst werden sollen. Die elektrische Steuereinheit ECU generiert basierend auf dem empfangenen Signal das Signal S1 und schaltet das zweite 3/2-Wegeventil 20 in die erste nicht gezeigte Schaltstellung, um den ersten Steuerdruck p1 auszusteuern, sodass das erste 3/2-Wegeventil 14 ebenfalls in die zweite nicht gezeigte Schaltstellung geschaltet wird, um den Federspeicherbremsdruck pF auszusteuern, sodass der Federspeicheranschluss 4 belüftet wird. In dieser Folge werden die an den Federspeicheranschluss 4 angeschlossenen Federspeicherbremszylinder 6 belüftet und gelöst. Das Fahrzeug kann sich in Bewegung setzen.

Das zweite Signal S2 wird basierend auf über den elektronischen Anschluss 40 empfangenen Hilfsbremsanforderungssignalen ausgelöst und dient dazu, das dritte 3/2-Wegeventil 22 und in Folge, das 2/2-Wege-Sperrventil 16 zu schalten, um die Federspeicherbremszylinder 6, die an den Federspeicheranschluss 4 angeschlossen sind, gestuft zu entlüften.

Die in Figur 1 gezeigte erste Ausführungsform des elektropneumatischen Feststellbremsmoduls 1 erlaubt auch eine Anhängerkontrollstellungsfunktion.

Bei Zugfahrzeuganhängerkombinationen ist es bevorzugt, dass die Betriebsbremsen des Anhängers in Übereinstimmung mit den Federspeicherbremszylindern 6 des Zugfahrzeugs eingebremst werden. Hierbei wird grundsätzlich zwischen der sogenannten europäischen Anhängersteuerung und der sogenannten skandinavischen Anhängersteuerung unterschieden. Währen bei der europäischen Anhängersteuerung die Betriebsbremsen des Anhängers im geparkten Zustand des Fahrzeugs permanent eingebremst sein sollen, wird bei der skandinavischen Anhängersteuerung gefordert, dass im geparkten Zustand der Zugfahrzeuganhängerkombination die Betriebsbremsen des Anhängers gelöst werden, um ein Einfrieren zu verhindern. Dennoch wird auch bei einer skandinavischen Anhängersteuerung gefordert, dass für andere Fälle, in denen die Federspeicherbremszylinder 6 des Zugfahrzeugs aktiviert werden, das heißt zugespannt werden, die Betriebsbremsen des Anhängers ebenfalls eingebremst werden.

Zu diesem Zweck weist das elektropneumatische Feststellbremsmodul 1 gemäß dieser Ausführungsform einen Anhängersteuerventilanschluss 30 sowie ein Anhängerventil 32 auf. An dem Anhängersteuerventilanschluss 30 wird ein Anhängersteuerdruck pA ausgesteuert, der dem Federspeicherbremsdruck pF entspricht, oder ein äquivalenter Druck hierzu ist. An den Anhängersteuerventilanschluss 30 ist ein Anhängersteuerventil TCV anschließbar, welches den bereitgestellten Anhängersteuerdruck pA invertiert und dann invers an Betriebsbremsen eines Anhängerwagens (nicht gezeigt) aussteuert.

Das Anhängerventil 32 dient zur Umsetzung der Anhängerkontrollstellungsfunktion. Zu diesem Zweck ist das Anhängerventil 32 in dieser Ausführungsform (Figur 1) als viertes 3/2-Wegeventil 34 ausgebildet und weist einen ersten Anhängerventilanschluss 34.1, einen zweiten Anhängerventilanschluss 34.2 und einen dritten Anhängerventilanschluss 34.3 auf. In einer ersten in Figur 1 nicht gezeigten Schaltstellung ist der erste Anhängerventilanschluss 34.1 mit dem zweiten Anhängerventilanschluss 34.2 verbunden. In einer zweiten, in Figur 1 gezeigten Schaltstellung, ist der zweite Anhängerventilanschluss 34.2 mit dem dritten Anhängerventilanschluss 34.3 verbunden. Der erste Anhängerventilanschluss ist mit einer vierten pneumatischen Leitung 62 verbunden, die von der dritten pneumatischen Leitung 58 abzweigt. Insofern liegt an dem ersten Anhängerventilanschluss 34.1 der Vorratsdruck pV an. Der zweite Anhängerventilanschluss 34.2 ist mit dem Anhängerventilanschluss 30 verbunden. Der dritte Anhängerventilanschluss 34.3 ist über eine Abzweigleitung 36 mit der Federspeicherbremsdruckleitung 38 verbunden, in die der Federspeicherbremsdruck pF ausgesteuert ist. Das heißt an dem dritten Anhängerventilanschluss 34.3 liegt der Federspeicherbremsdruck pF an.

Mittels des Anhängerventils 32 kann nun an dem Anhängersteuerventilanschluss 30 entweder der Vorratsdruck pV oder der Federspeicherbremsdruck pF ausgesteuert werden. Für den Fall, dass der Federspeicherbremsdruck pF als Anhängersteuerdruck PA ausgesteuert wird, werden die Betriebsbremsen des Anhängerwagens in Übereinstimmung mit den Federspeicherbremszylindern 6 gesteuert. Das heißt, wenn die Federspeicherbremszylinder 6 zuspannen, werden auch die Betriebsbremsen des Anhängerwagens zugespannt. Um dies zu verhindern, kann mittels eines dritten Signals S3 von der elektrischen Steuereinheit ECU das Anhängerventil 32 in die erste Schaltstellung gebracht werden, sodass an dem Anhängersteuerventilanschluss 30 als Anhängersteuerdruck PA der Vorratsdruck pV ausgesteuert wird. In diesem Fall bleiben die Betriebsbremsen des Anhängerwagens gelöst.

Das in Figur 1 gezeigte Ausführungsbeispiel nutzt ein Anhängerventil 32, welches stromlos in der zweiten in Figur 1 gezeigten Schaltstellung ist, und somit stromlos den Federspeicherbremsdruck pF als Anhängersteuerdruck pA aussteuert. Das in Figur 1 gezeigte Ausführungsbeispiel setzt somit die europäische Anhängersteuerung um, in der in einem geparkten Zustand des Fahrzeugs (stromloser Zustand) der Anhängerwagen in Übereinstimmung mit den Federspeicherbremszylindern 6 des Zugfahrzeugs eingebremst sind.

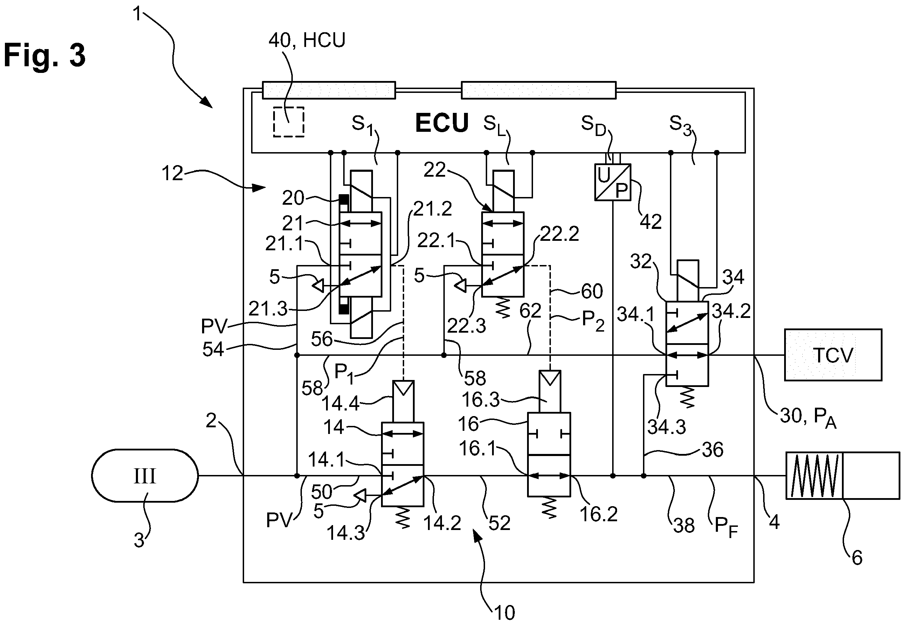

Eine Variante hierzu, nämlich die skandinavische Anhängersteuerung ist in Figur 3 gezeigt. Wie sich aus Figur 3 ergibt, besteht der einzige Unterschied in dem dritten Ausführungsbeispiel des elektropneumatischen Feststellbremsmoduls 1 darin, dass die Schaltstellungen des Anhängerventils 32 umgekehrt sind. Das heißt, das Anhängerventil 32 gemäß dem dritten Ausführungsbeispiel (Figur 3) ist stromlos in der im ersten Ausführungsbeispiel (Figur 1) als erste Schaltstellung bezeichneten Schaltstellung und verbindet somit stromlos den ersten Anhängerventilanschluss 34.1 mit dem zweiten Anhängerventilanschluss 34.2, sodass stromlos der Vorratsdruck pV als Anhängersteuerdruck pA ausgesteuert wird und somit die Betriebsbremsen des Anhängerwagens im stromlosen Zustand (geparktem Zustand) gelöst sind.

Im Rahmen der Erfindung lässt sich also auf besonders einfache Art und Weise mit dem elektropneumatischen Feststellbremsmodul 1 sowohl die europäische Anhängersteuerung als auch die skandinavische Anhängersteuerung umsetzen.

Sowohl im ersten als auch im dritten Ausführungsbeispiel (Figuren 1 und 3) ist der Druckluftvorrat 3 direkt mit dem Vorratsanschluss 2 verbunden. Diese beiden Ausführungsformen (Figur 1 und Figur 3) erlauben also auch ein Entlüften des Federspeicheranschlusses 4 durch Herunterpumpen des Druckluftvorrats 3. Für den Fall, dass beispielsweise das Bistabilventil 21 fehlerhaft funktioniert und dauerhaft in der ersten in den Figuren 1 und 3 nicht gezeigten Schaltstellung verharrt, in der der erste Steuerdruck p1 ausgesteuert wird, kann der Federspeicheranschluss 4 dadurch entlüftet werden, dass der Druckluftvorrat 3 insgesamt heruntergepumpt wird und somit auf ein Umgebungsdruckniveau geregelt wird. So lässt sich auch bei einer Fehlfunktion des Bistabilventils 21, oder auch bei einer Fehlfunktion der elektrischen Steuereinheit ECU, oder des ersten 3/2-Wegeventils 14 ein sicheres Einbremsen des Fahrzeugs erreichen.

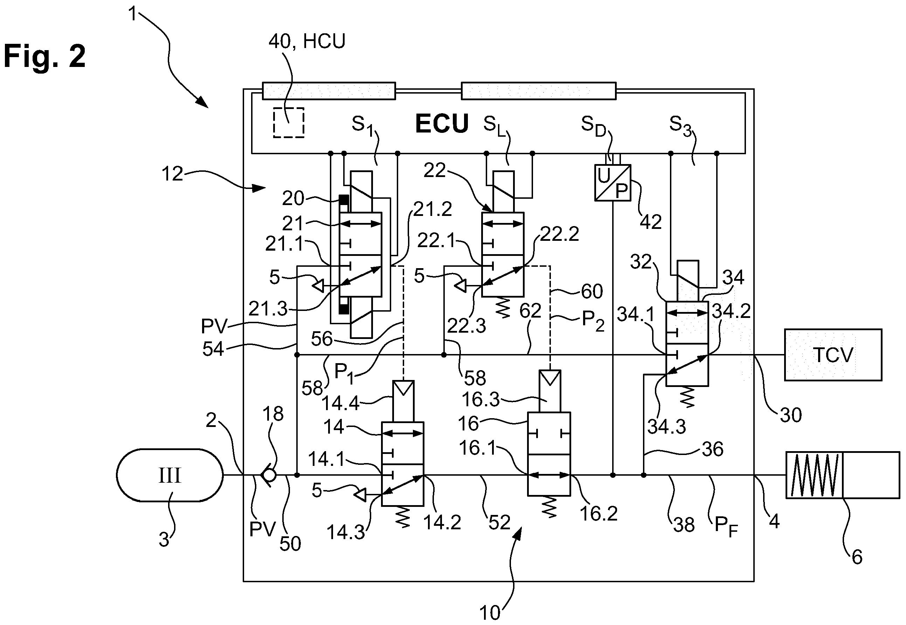

In dem zweiten Ausführungsbeispiel (Figur 2) des elektropneumatischen Feststellbremsmoduls 1 ist hingegen ein zusätzliches Rückschlagventil 18 in die erste pneumatische Leitung 50 eingesetzt, und zwar direkt stromabwärts hinter dem Vorratsanschluss 2, also zwischen Vorratsanschluss 2 und der Abzweigstelle der dritten pneumatischen Leitung 54. Über dieses Rückschlagventil 18 wird ein Zurückströmen von Druckluft aus den Federspeicherzylindern 6 in den Druckluftvorrat 3 verhindert. Hierdurch ist es möglich, dass auch im Falle einer Leckage des Druckluftvorrats 3 dauerhaft ein gelöster Zustand der Federspeicherbremszylinder 6 aufrechterhalten werden kann, und das Fahrzeug nicht ungewollt aufgrund einer Leckage oder eines Abrisses einer pneumatischen Leitung mittels der Federspeicherbremszylinder 6 einbremst.

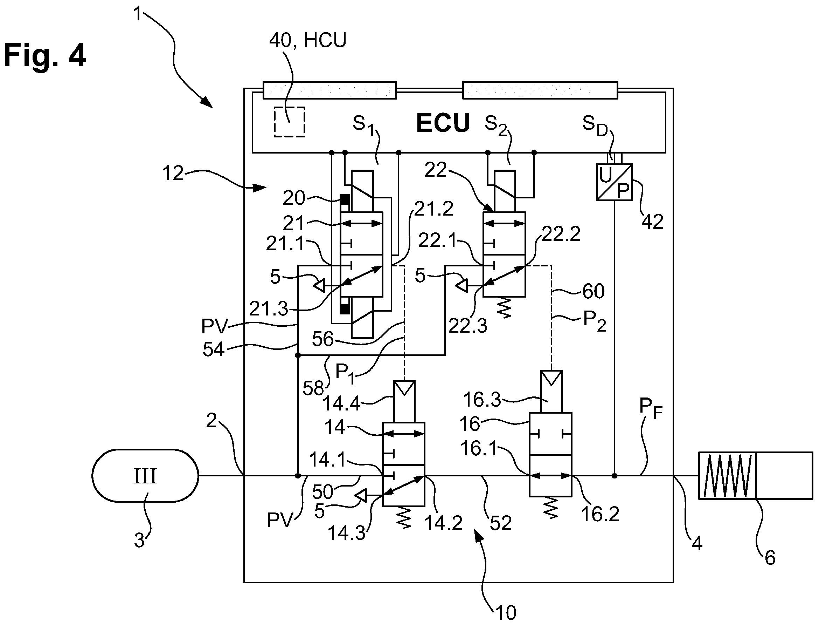

Das vierte Ausführungsbeispiel (Figur 4) des elektropneumatischen Feststellbremsmoduls 1 unterscheidet sich von den ersten drei Ausführungsbeispielen (Figuren 1-3) dadurch, dass das elektropneumatische Feststellbremsmodul 1 keinen Anhängersteuerventilanschluss 30 aufweist. In entsprechender Weise ist auch kein Anhängersteuerventil 32 vorgesehen. Mithin entfällt auch die vierte pneumatische Leitung 62 sowie die Abzweigleitung 36. Die übrigen Elemente und Bauteile des vierten Ausführungsbeispiels sind identisch zu den ersten drei Ausführungsbeispielen.

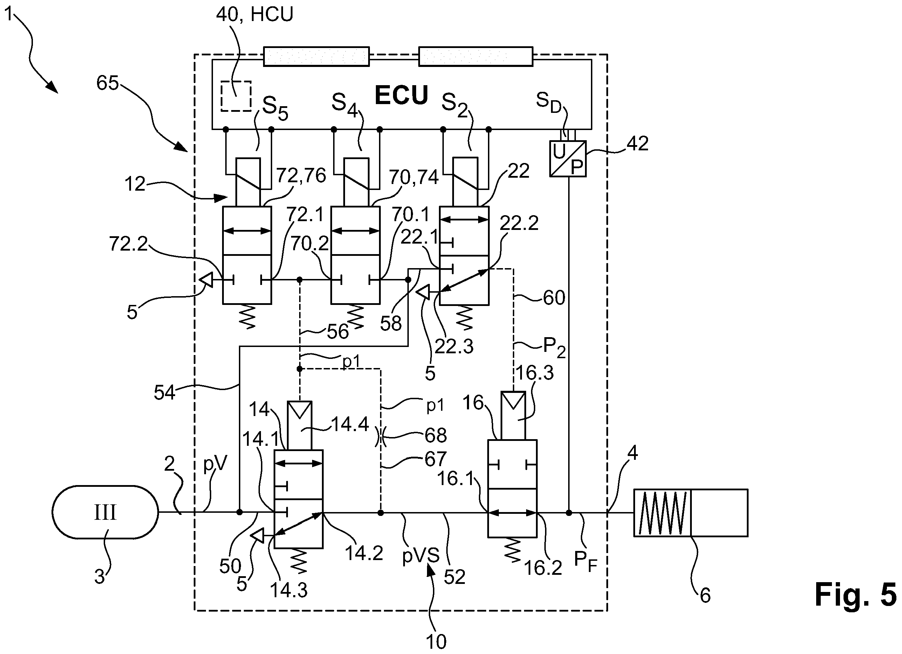

Die Ausführungsbeispiele 5, 6 und 7 gemäß den Figuren 5, 6 und 7 zeigen jeweils ein elektropneumatisches Feststellbremsmodul 1, wie es grundsätzlich aus dem vierten Ausführungsbeispiel (Figur 4) bekannt ist. Allerdings ist das Bistabilventil 21 durch eine monostabile Einlass-Auslass-Ventilkombination 65 ersetzt.

Zunächst wird mit Bezug auf Figur 5 in einem fünften Ausführungsbeispiel ein besonders einfaches Schaltungslayout beschrieben. Die monostabile Einlass-Auslass-Ventilkombination 65 weist ein Einlassventil 70 und ein Auslassventil 72 auf. Das Einlassventil 70 ist in diesem Ausführungsbeispiel als 2/2-Wege-Einlassventil 74 ausgebildet und weist einen ersten Einlassventilanschluss 70.1 und einen zweiten Einlassventilanschluss 70.2 auf. Das Einlassventil 70 ist als monostabiles Ventil ausgebildet und ist in die erste in Figur 5 gezeigte geschlossene Schaltstellung vorgespannt. Durch Bereitstellung eines vierten Schaltsignals S4 ist das Einlassventil 70 von der ersten in Figur 5 gezeigten Schaltstellung in die zweite in Figur 5 nicht gezeigte Schaltstellung schaltbar. In der zweiten in Figur 5 nicht gezeigten Schaltstellung ist der erste Einlassventilanschluss 70.1 mit dem zweiten Einlassventilanschluss 70.2 verbunden.

Der zweite Einlassventilanschluss 70.2 ist mit der ersten pneumatischen Steuerleitung 56 verbunden, die, wie bereits mit Bezug auf die ersten vier Ausführungsbeispiele beschrieben wurde, mit dem ersten Steueranschluss 14.4 des ersten 3/2-Wegeventils verbunden ist. Durch Schalten des Einlassventils 70 lässt sich folglich der erste Steuerdruck p1 aussteuern. Sobald dieser den ersten Schwellwert überschreitet, schaltet das erste 3/2-Wegeventil 14 in die zweite in Figur 5 nicht gezeigte Schaltstellung, und an dem Arbeitsanschluss 14.2 wird der Arbeitsdruck pVS ausgesteuert, der dann als Federspeicherbremsdruck pF bereitgestellt werden kann, wenn das 2/2-Wege-Sperrventil 16 in der in Figur 5 gezeigten offenen Schaltstellung ist.

Um eine pneumatische Selbsthaltung des ersten 3/2-Wegeventils 14 zu erreichen, wurde in den ersten vier Ausführungsbeispielen (Figuren 1 bis 4) das Bistabilventil 21 eingesetzt, welches sowohl in der ersten als auch in der zweiten Schaltstellung stabil ist. Die monostabile Einlass-Auslass-Ventilkombination 65 ist allerdings nicht in der offenen Schaltstellung stabil, sondern in der geschlossenen. Aus diesem Grund weist das elektropneumatische Feststellbremsmodul 1 gemäß dem fünften Ausführungsbeispiel (Figur 5) eine Rückführleitung 67 auf, die den von dem ersten 3/2-Wegeventil 14 ausgesteuerten Arbeitsdruck pVS zum ersten Steuereingang 14.4 rückführt und dort als ersten Steuerdruck p1 bereitstellt. Auf diese Weise wird der erste Steuerdruck p1 aufrechterhalten, auch wenn das Einlassventil 70, nachdem es zunächst in die offene Schaltstellung geschaltet wurde, wieder in die geschlossene Schaltstellung geschaltet wird. Eine pneumatische Selbsthaltung ist erreicht.

Zum Entlüften des ersten Steuereingangs 14.4, um das erste 3/2-Wegeventil 14 in die in Figur 5 gezeigte erste Schaltstellung zurückfallen zu lassen, ist das Auslassventil 72 vorgesehen. Dieses ist gemäß dem fünften Ausführungsbeispiel (Figur 5) wiederum als 2/2-Wege-Auslassventil 76 ausgebildet. Es weist einen ersten Auslassventilanschluss 72.1 und einen zweiten Auslassventilanschluss 72.2 auf. Der erste Auslassventilanschluss 72.1 ist mit der ersten pneumatischen Steuerleitung 56 verbunden, und der zweite Auslassventilanschluss 72.2 ist mit einer Entlüftung 5 verbunden. Das 2/2-Wege-Auslassventil 76 ist stromlos in der in Figur 5 gezeigten geschlossenen ersten Schaltstellung. Durch ein entsprechendes fünftes Schaltsignal S5 lässt sich das 2/2-Wege-Auslassventil 76 in die in Figur 5 nicht gezeigte zweite offene Schaltstellung verbringen, in der der erste Auslassventilanschluss 72.1 mit dem zweiten Auslassventilanschluss 72.2 verbunden ist. Auf diese Weise lässt sich die erste pneumatische Steuerleitung 56 und somit der erste Steueranschluss 14.4 entlüften, sodass das erste 3/2-Wegeventil 14 in die in Figur 5 gezeigte erste Schaltstellung zurückfallen kann. Infolgedessen wird der Federspeicheranschluss 4 entlüftet, wenn auch das Sperrventil 16 in der in Figur 5 gezeigten offenen Schaltstellung ist.

Um bei leichten Druckschwankungen am Federspeicheranschluss 4 die pneumatische Selbsthaltung nicht unmittelbar aufzulösen und ein Wechsel der Schaltzustände zu ermöglichen, ist in der Rückführleitung 67 gemäß diesem Ausführungsbeispiel (Figur 5) eine Drossel 68 angeordnet. Die Drossel 68 kann ebenso an anderen Positionen angeordnet sein.

Wie sich aus Figur 5 ergibt, ist die Rückführleitung 67 direkt mit dem ersten Steuereingang 14.4 ohne Zwischenschaltung eines Ventils verbunden. Der rückgeführte Druck kann also nicht ausgesperrt werden, sondern wird unmittelbar dann bereitgestellt, wenn das erste 3/2-Wegeventil 14 geschaltet hat. Insofern ist auch die Drossel 68 dienlich, um ein Übersteuern zu vermeiden.

Die Ausführungsbeispiele 6 und 7 zeigen nun Varianten, bei denen die Rückführleitung 67 nicht direkt mit dem ersten Steuereingang 14.4 verbunden ist, sondern ein Ventil zwischengeschaltet ist.

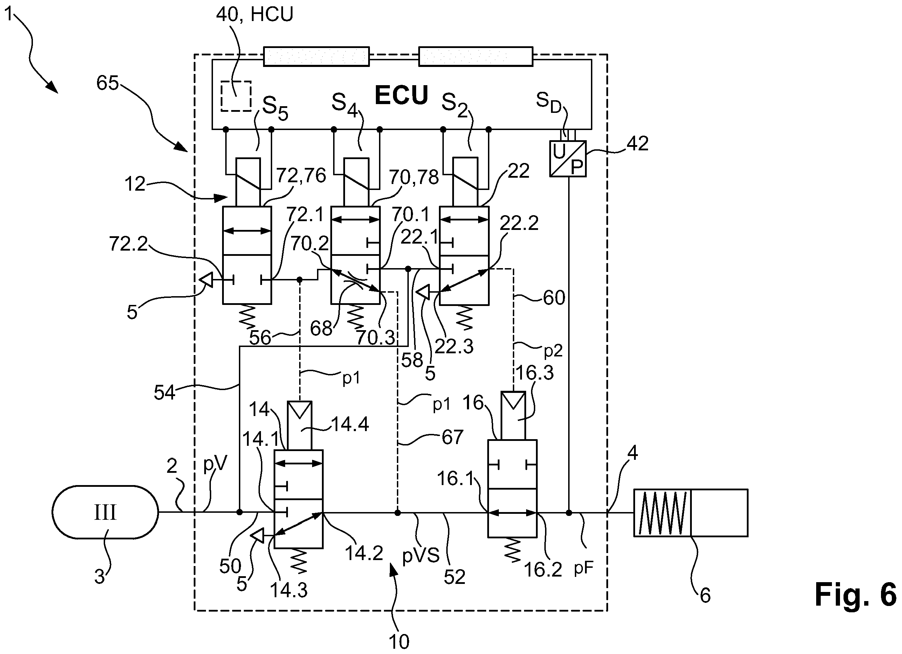

Figur 6 zeigt zunächst in einem sechsten Ausführungsbeispiel, dass das Einlassventil 70 als 3/2-Wege-Einlassventil 78 ausgebildet ist. Es weist insofern einen dritten Einlassventilanschluss 70.3 auf, der dann mit der Rückführleitung 67 verbunden ist. Der erste Einlassventilanschluss 70.1 ist wie auch beim fünften Ausführungsbeispiel (Figur 5) mit dem Vorratsanschluss 2 verbunden, insbesondere über die dritte pneumatische Leitung 54. Der zweite Einlassventilanschluss 70.2 ist wie bereits aus dem fünften Ausführungsbeispiel (Figur 5) bekannt mit der ersten pneumatischen Steuerleitung 56 verbunden. Durch Schalten des 3/2-Wege-Einlassventils 78 in die zweite in Figur 6 nicht gezeigte Schaltstellung wird also der zweite Einlassventilanschluss 70.2 mit dem Vorratsanschluss 2 verbunden, sodass der erste Steuerdruck p1 ausgesteuert wird. Infolgedessen schaltet das erste 3/2-Wegeventil 14 in die zweite in Figur 6 nicht gezeigte Schaltstellung, und der Arbeitsdruck pVS wird ausgesteuert. Über die Rückführleitung 67 wird dieser Druck rückgeführt und liegt dann am dritten Einlassventilanschluss 70.3 an. Wird das Einlassventil 70 nun stromlos geschaltet, fällt es in die in Figur 6 gezeigte erste Schaltstellung zurück, und der dritte Einlassventilanschluss 70.3 wird mit dem zweiten Einlassventilanschluss 70.2 verbunden. Der rückgeführte Druck wird durchgesteuert und als erster Steuerdruck p1 an dem ersten Steuereingang 14.4 bereitgestellt. Hierdurch ist dann eine pneumatische Selbsthaltung des ersten 3/2-Wegeventils 14 erreicht. Die Drossel 68 ist in diesem Ausführungsbeispiel (Figur 6) in dem 3/2-Wege-Einlassventil 78 ausgebildet.

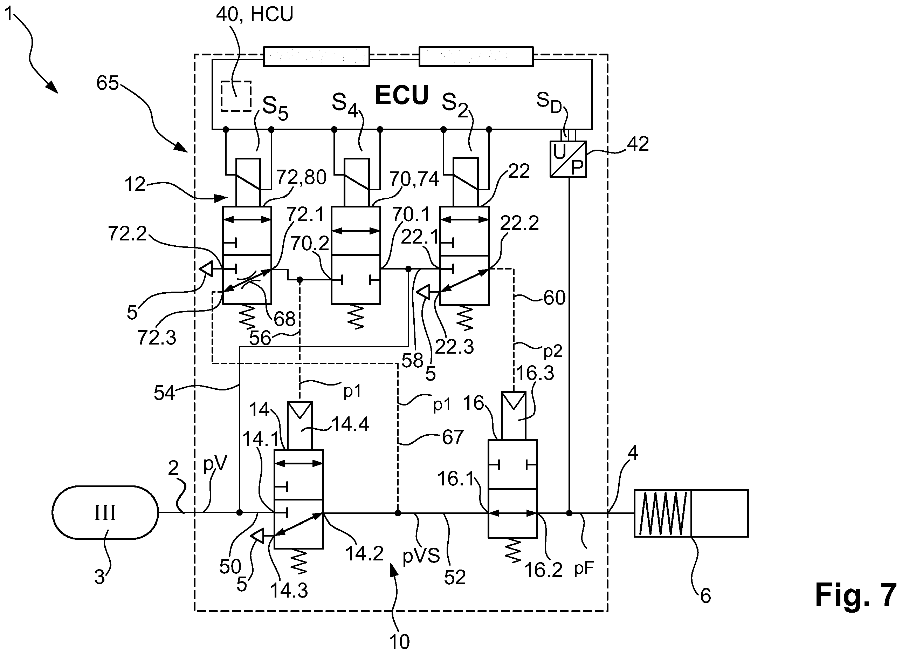

In ähnlicher Weise ist in dem siebten Ausführungsbeispiel (Figur 7) das Auslassventil 72 als 3/2-Wege-Auslassventil 80 ausgebildet. Das Einlassventil 70 ist wie im fünften Ausführungsbeispiel (Figur 5) als 2/2-Wege-Einlassventil 74 ausgebildet.

Das 3/2-Wege-Auslassventil 80 weist einen dritten Auslassventilanschluss 72.3 auf, der dann in diesem Ausführungsbeispiel (Figur 7) mit der Rückführleitung 67 verbunden ist. Das heißt, der wesentliche Unterschied zwischen dem sechsten Ausführungsbeispiel (Figur 6) und dem siebten Ausführungsbeispiel (Figur 7) liegt darin, dass die Rückführleitung 67 nicht mit dem Einlassventil 70, sondern mit dem Auslassventil 72 verbunden ist. In dieser Variante wird bei Schalten des Einlassventils 70 und Aussteuern des ersten Steuerdrucks p1 ebenfalls das erste 3/2-Wegeventil 14 geschaltet und der Arbeitsdruck pVS als erster Steuerdruck über die Rückführleitung 67, das Auslassventil 72 und die erste pneumatische Steuerleitung 56 bereitgestellt. Die Bereitstellung erfolgt unmittelbar und nicht erst bei Stromlosschalten des Einlassventils 70, wie dies im sechsten Ausführungsbeispiel (Figur 6) der Fall ist. Das 3/2-Wege-Auslassventil 80 ist stromlos in der in Figur 7 gezeigten zweiten Schaltstellung, bei der der dritte Auslassventilanschluss 72.3 mit dem ersten Auslassventilanschluss 72.1 verbunden ist, sodass die Rückführleitung 67 mit der ersten pneumatischen Steuerleitung 56 verbunden ist. Auch auf diese Weise lässt sich eine pneumatische Selbsthaltung des ersten 3/2-Wegeventils 14 erreichen.

### Bezugszeichenliste (Bestandteil der Beschreibung)

- 1: elektropneumatisches Feststellbremsmodul
- 2: Vorratsanschluss
- 3: Druckluftvorrat
- 4: Federspeicheranschluss
- 5: Entlüftung
- 6: Federspeicherbremszylinder
- 10: Einlass-Auslass-Ventileinheit
- 12: elektropneumatische Vorsteuereinheit
- 14: erstes 3/2-Wegeventil
- 14.1: Einlassanschluss des ersten 3/2-Wegeventils
- 14.2: Arbeitsanschluss des ersten 3/2-Wegeventils
- 14.3: Entlüftungsanschluss des ersten 3/2-Wegeventils
- 14.4: erster Steuereingang des ersten 3/2-Wegeventils
- 16: 2/2-Wege-Sperrventil
- 16.1: erster Sperrventilanschluss
- 16.2: zweiter Sperrventilanschluss
- 16.3: zweiter Steuereingang
- 18: Rückschlagventil
- 20: zweites 3/2-Wegeventil
- 21: Bistabilventil
- 21.1: erster Bistabilventilanschluss
- 21.2: zweiter Bistabilventilanschluss
- 21.3: dritter Bistabilventilanschluss
- 22: drittes 3/2-Wegeventil
- 22.1: Einlassanschluss des dritten 3/2-Wegeventils
- 22.2: Arbeitsanschluss des dritten 3/2-Wegeventils
- 22.3: Entlüftungsanschluss des dritten 3/2-Wegeventils
- 30: Anhängersteuerventilanschluss
- 32: Anhängerventil
- 34: viertes 3/2-Wegeventil
- 34.1: erster Anhängerventilanschluss
- 34.2: zweiter Anhängerventilanschluss
- 34.3: dritter Anhängerventilanschluss
- 36: Abzweigleitung
- 38: Federspeicherbremsdruckleitung
- 40: elektronischer Anschluss
- 50: erste pneumatische Leitung
- 52: zweite pneumatische Leitung
- 54: dritte pneumatische Leitung
- 56: erste pneumatische Steuerleitung
- 58: dritte pneumatische Leitung
- 60: zweite pneumatische Steuerleitung
- 62: vierte pneumatische Leitung
- 65: monostabile Einlass-Auslass-Ventilkombination
- 67: Rückführleitung
- 68: Drossel
- 70: Einlassventil
- 70.1: erster Einlassventilanschluss
- 70.2: zweiter Einlassventilanschluss
- 70.3: dritter Einlassventilanschluss
- 72: Auslassventil
- 72.1: erster Auslassventilanschluss
- 72.2: zweiter Auslassventilanschluss
- 72.3: dritter Auslassventilanschluss
- 74: 2/2-Wege-Einlassventil
- 76: 2/2-Wege-Auslassventil
- 78: 3/2-Wege-Einlassventil
- 80: 3/2-Wege-Auslassventil
- ECU: elektronische Steuereinheit
- pA: Anhängersteuerdruck
- pV: Vorratsdruck
- pVS: von dem ersten 3/2-Wegeventil ausgesteuerter Druck
- pF: Federspeicherbremsdruck
- p1: erster Steuerdruck
- p2: zweiter Steuerdruck
- S1: erstes Schaltsignal
- S2: zweites Schaltsignal
- S3: drittes Schaltsignal
- S4: viertes Schaltsignal
- S5: fünftes Schaltsignal
- SD: Drucksignal
- TCV: Anhängersteuerventil

## Patentansprüche

1. Elektropneumatisches Feststellbremsmodul (1), mit
einem Vorratsanschluss (2) zum Anschließen eines Druckluftvorrats (3),
wenigstens einem Federspeicheranschluss (4) zum Anschließen wenigstens eines Federspeicherbremszylinders (6),
einer Einlass-Auslass-Ventileinheit (10), die wenigstens eine erste Schaltstellung und eine zweite Schaltstellung einnehmen kann, und
einer elektropneumatischen Vorsteuereinheit (12) zum Aussteuern wenigstens eines ersten Steuerdrucks (p1) an der Einlass-Auslass-Ventileinheit (10),
wobei in der ersten Schaltstellung der Einlass-Auslass-Ventileinheit (10) der Federspeicheranschluss (4) mit dem Vorratsanschluss (2) zum Aussteuern eines Federspeicherbremsdrucks (pF) verbunden ist, und in der zweiten Schaltstellung der Einlass-Auslass-Ventileinheit (10) der Federspeicheranschluss (4) mit einem Entlüftungsanschluss (14.3) der Einlass-Auslass-Ventileinheit (10) verbunden ist,
wobei die Einlass-Auslass-Ventileinheit (10) wenigstens ein erstes 3/2-Wegeventil (14) mit genau zwei Schaltstellungen aufweist,
**dadurch gekennzeichnet, dass**
die Einlass-Auslass-Ventileinheit (10) in der zweiten Schaltstellung ist, wenn der erste Steuerdruck (p1) unterhalb eines ersten Grenzwerts liegt.

2. Elektropneumatisches Feststellbremsmodul (1) nach Anspruch 1, wobei in der ersten Schaltstellung der Einlass-Auslass-Ventileinheit (10) der Federspeicherbremsdruck (pF) direkt von dem Vorratsanschluss (2) an den Federspeicheranschluss (4) durchsteuerbar ist.

3. Elektropneumatisches Feststellbremsmodul (1) nach Anspruch 2, wobei bei dem direkten Durchsteuern des Federspeicherbremsdrucks (pF) von dem Vorratsanschluss (2) an den Federspeicheranschluss (4), eine Volumenverbindung zwischen dem Vorratsanschluss (2) und dem Federspeicheranschluss (4) hergestellt wird, ohne Zwischenschaltung eines Relaisventils.

4. Elektropneumatisches Feststellbremsmodul (1) nach einem der vorstehenden Ansprüche, wobei die Einlass-Auslass-Ventileinheit (10) wenigstens ein 2/2-Wege-Sperrventil (16) aufweist.

5. Elektropneumatisches Feststellbremsmodul (1) nach einem der vorstehenden Ansprüche, wobei wenigstens das erste 3/2-Wegeventil (14) pneumatisch gesteuert ist.

6. Elektropneumatisches Feststellbremsmodul (1) nach Anspruch 4, wobei das erste 3/2-Wegeventil (14) als Einlass-Auslass-Ventil für den Federspeicheranschluss (4) zum Be- und Entlüften des Federspeicheranschlusses (4) dient und das 2/2-Wege-Sperrventil (16) zum Sperren einer Be- und Entlüften des Federspeicheranschlusses (4) dient.

7. Elektropneumatisches Feststellbremsmodul (1) nach einem der vorstehenden Ansprüche, wobei das erste 3/2-Wegeventil (14) einen Einlassanschluss (14.1), einen Arbeitsanschluss (14.2) und einen Entlüftungsanschluss (14.3) aufweist, und das erste 3/2-Wegeventil (14) dazu ausgebildet ist, wechselseitig den Arbeitsanschluss (14.2) mit dem Einlassanschluss (14.1) und dem Entlüftungsanschluss (14.3) zu verbinden.

8. Elektropneumatisches Feststellbremsmodul (1) nach Anspruch 7, wobei an dem Eingangsanschluss (14.1) ein Vorratsdruck (pV) aussteuerbar ist.

9. Elektropneumatisches Feststellbremsmodul (1) nach einem der Ansprüche 7 bis 8, wobei zwischen dem Eingangsanschluss (14.1) und dem Vorratsanschluss (2) ein Rückschlagventil (18) angeordnet ist zum Verhindern eines Rückströmens von dem Federspeicheranschluss (4) zum Vorratsanschluss (2).

10. Elektropneumatisches Feststellbremsmodul (1) nach einem der Ansprüche 7 bis 9, wobei das 2/2-Wege-Sperrventil (16) einen ersten Sperrventilanschluss (16.1) und einen zweiten Sperrventilanschluss (16.2) aufweist, wobei der erste Sperrventilanschluss (16.1) mit dem Arbeitsanschluss (14.2), und der zweite Sperrventilanschluss (16.2) mit dem Federspeicheranschluss (4) verbunden ist.

11. Elektropneumatisches Feststellbremsmodul (1) nach einem der vorstehenden Ansprüche, wobei die elektropneumatische Vorsteuereinheit (12) wenigstens ein zweites 3/2-Wege-Ventil (20) aufweist, wobei das zweite 3/2-Wege-Ventil (20) zum Aussteuern des ersten Steuerdrucks (p1) vorgesehen ist.

12. Elektropneumatisches Feststellbremsmodul (1) nach Anspruch 11, wobei das zweite 3/2-Wege-Ventil (20) als Bistabilventil (21) ausgebildet ist.

13. Elektropneumatisches Feststellbremsmodul (1) nach Anspruch 12, wobei das Bistabilventil (21) einen ersten Bistabilventilanschluss (21.1), einen zweiten Bistabilventilanschluss (21.2) und einen dritten Bistabilventilanschluss (21.3) aufweist, wobei der erste Bistabilventilanschluss (21.1) mit dem Vorratsanschluss (2) verbunden ist, der zweite Bistabilventilanschluss (21.2) den ersten Steuerdruck (p1) aussteuert und der dritte Bistabilventilanschluss (21.3) mit einer Entlüftung verbunden ist.

14. Elektropneumatisches Feststellbremsmodul (1) nach Anspruch 5 und 13, wobei der zweite Bistabilventilanschluss (21.2) mit einem ersten Steuereingang (14.4) des ersten 3/2-Wege-Ventils (14) verbunden ist.

15. Elektropneumatisches Feststellbremsmodul (1) nach einem der vorstehenden Ansprüche 1 bis 10, wobei die elektropneumatische Vorsteuereinheit (12) eine monostabile Einlass-Auslass-Ventilkombination (65) mit einem Einlassventil (70) und einem Auslassventil (72) zum Aussteuern des ersten Steuerdrucks (p1) aufweist.

16. Elektropneumatisches Feststellbremsmodul (1) nach Anspruch 15, aufweisend eine Rückführleitung (67), die den von dem erstes 3/2-Wegeventil (14) ausgesteuerten Druck (pVS) als ersten Steuerdruck (p1) an der Einlass-Auslass-Ventileinheit (10) bereitstellt.

17. Elektropneumatisches Feststellbremsmodul (1) nach Anspruch 16, wobei der von dem erstes 3/2-Wegeventil (14) ausgesteuerte Druck (pVS) gedrosselt als erster Steuerdruck (p1) über die Rückführleitung (67) an der Einlass-Auslass-Ventileinheit (10) bereitgestellt wird.

18. Elektropneumatisches Feststellbremsmodul (1) nach einem der Ansprüche 15 bis 17, wobei das Einlassventil (70) einen mit dem Vorratsanschluss (2) verbundenen ersten Einlassventilanschluss (70.1) und einen mit der Einlass-Auslass-Ventileinheit (10) verbundenen zweiten Einlassventilanschluss (70.2) aufweist, wobei durch Schalten des Einlassventils (70) der erster Steuerdruck (p1) an dem zweiten Einlassventilanschluss (70.2) aussteuerbar ist.

19. Elektropneumatisches Feststellbremsmodul (1) nach einem der Ansprüche 15 bis 18, wobei das Auslassventil (72) einen mit der Einlass-Auslass-Ventileinheit (10) verbundenen ersten Auslassventilanschluss (72.1) und einen mit einer Entlüftung (5) verbundenen zweiten Auslassventilanschluss (72.2) zum Entlüften des ersten Steuerdrucks (p1) aufweist.

20. Elektropneumatisches Feststellbremsmodul (1) nach Anspruch 16 oder 17, wobei die Rückführleitung (67) direkt mit der Einlass-Auslass-Ventileinheit (10) verbunden ist.

21. Elektropneumatisches Feststellbremsmodul (1) nach Anspruch 16 und 18, wobei das Einlassventil (70) einen mit der Rückführleitung (67) verbundenen dritten Einlassventilanschluss (70.3) aufweist, wobei in einer ersten Schaltstellung des Einlassventils (70) der zweite Einlassventilanschluss (70.2) mit dem ersten Einlassventilanschluss (70.1) verbunden ist, und in einer zweiten Schaltstellung des Einlassventils (70) der zweite Einlassventilanschluss (70.2) mit dem dritten Einlassventilanschluss (70.3) verbunden ist.

22. Elektropneumatisches Feststellbremsmodul (1) nach Anspruch 16 und 19, wobei das Auslassventil (72) einen mit der Rückführleitung (67) verbundenen dritten Auslassventilanschluss (72.3) aufweist, wobei in einer ersten Schaltstellung des Auslassventils (72) der erste Auslassventilanschluss (72.1) mit dem dritten Auslassventilanschluss (72.3) verbunden ist, und in einer zweiten Schaltstellung des Auslassventils (72) der erste Auslassventilanschluss (72.1) mit dem zweiten Auslassventilanschluss (72.2) verbunden ist.

23. Elektropneumatisches Feststellbremsmodul (1) nach einem der vorstehenden Ansprüche, wobei die elektropneumatische Vorsteuereinheit (12) wenigstens ein drittes 3/2-Wege-Ventil (22) aufweist, zum Aussteuern eines zweiten Steuerdrucks (p2).

24. Elektropneumatisches Feststellbremsmodul (1) nach Anspruch 23, wobei das dritte 3/2-Wege-Ventil (22) einen Einlassanschluss (22.1), einen Arbeitsanschluss (22.2) und einen Entlüftungsanschluss (22.3) aufweist, und das dritte 3/2-Wege-Ventil (22) dazu ausgebildet ist, wechselseitig den Arbeitsanschluss (22.2) mit dem Einlassanschluss (22.1) und dem Entlüftungsanschluss (22.3) zu verbinden.

25. Elektropneumatisches Feststellbremsmodul (1) nach Anspruch 10 und 16, wobei der Einlassanschluss (22.1) mit dem Vorratsanschluss (2), der Arbeitsanschluss (22.2) mit einem zweiten Steuereingang (16.3) des 2/2-Wege-Sperrventils (16) und der Entlüftungsanschluss (22.3) mit einer Entlüftung verbunden ist.

26. Elektropneumatisches Feststellbremsmodul (1) nach einem der vorstehenden Ansprüche, aufweisend einen Anhängersteuerventilanschluss (30) zum Bereitstellen eines Anhängersteuerdrucks (pA).

27. Elektropneumatisches Feststellbremsmodul (1) nach Anspruch 26, wobei der Anhängersteuerventilanschluss (30) mit einem Anhängerventil (32) verbunden ist, das dazu vorgesehen ist, in einer ersten Schaltstellung wenigstens den Federspeicherbremsdruck (pF) als Anhängersteuerdrucks (pA) an dem Anhängersteuerventilanschluss (30) auszusteuern.

28. Elektropneumatisches Feststellbremsmodul (1) nach Anspruch 27, wobei das Anhängerventil (32) eine zweite Schaltstellung zum Ausführen einer Anhängerkontrollstellungsfunktion aufweist.

29. Elektropneumatisches Feststellbremsmodul (1) nach Anspruch 28, wobei das Anhängerventil (32) als viertes 3/2-Wegeventil (34) ausgebildet ist und einen ersten Anhängerventilanschluss (34.1), einen zweiten Anhängerventilanschluss (34.2) und einen dritten Anhängerventilanschluss (34.3) aufweist, wobei der erste Anhängerventilanschluss (34.1) mit dem Vorratsanschluss (2), der zweite Anhängerventilanschluss (34.2) mit dem Anhängersteuerventilanschluss (30) und der dritte Anhängerventilanschluss (34.3) mit einer Abzweigleitung (36) verbunden ist, die von einer mit dem Federspeicheranschluss (4) verbundenen Federspeicherbremsdruckleitung (38) abzweigt.

30. Elektropneumatisches Feststellbremsmodul (1) nach einem der Ansprüche 27 bis 29, wobei das Anhängerventil (32) in einer stromlosen Stellung in
- der ersten Schaltstellung; oder
- der zweiten Schaltstellung ist.

31. Elektropneumatisches Feststellbremsmodul (1) nach einem der vorstehenden Ansprüche, aufweisend eine elektrische Steuereinheit (ECU) mit einem elektrischen Anschluss (40) zum Empfangen von Feststellbremssignalen (HCU) und zum Bereitstellen entsprechender Schaltsignale (S1, S2, S3) wenigstens an die Vorsteuereinheit (12).

32. Elektropneumatisches Feststellbremsmodul (1) nach einem der vorstehenden Ansprüche, aufweisend einen Drucksensor (42), der dazu vorgesehen ist, den Federspeicherbremsdruck (pF) zu erfassen und ein entsprechendes Drucksignal (SD) bereitzustellen.

## Claims

1. Electropneumatic parking brake module (1), having a supply connection (2) for connecting a compressed air supply (3),
at least one spring-force accumulator connector (4) for connecting at least one spring-force accumulator brake cylinder (6),
an inlet-outlet valve unit (10), which can assume at least a first switching position and a second switching position, and
an electropneumatic pilot control unit (12) for outputting at least a first control pressure (p1) at the inlet-outlet valve unit (10),
wherein in the first switching position of the inlet-outlet valve unit (10) the spring-force accumulator connector (4) with is connected to the supply connection (2) for outputting of a spring-force accumulator brake pressure (pF), and in the second switching position of the inlet-outlet valve unit (10) the spring-force accumulator connector (4) is connected to a ventilating connector (14.3) of the inlet-outlet valve unit (10),
wherein the inlet-outlet valve unit (10) has at least a first 3/2 way valve (14) with precisely two switching positions,
**characterized in that**
the inlet-outlet valve unit (10) is in the second switching position when the first control pressure (p1) lies below a first limit value.

2. The electropneumatic parking brake module (1) according to claim 1, wherein in the first switching position of the inlet-outlet valve unit (10) the spring-force accumulator brake pressure (pF) can be fed through directly from the supply connection (2) to the spring-force accumulator connector (4).

3. The electropneumatic parking brake module (1) according to claim 2, wherein in the direct feeding through of the spring-force accumulator brake pressure (pF) from the supply connection (2) to the spring-force accumulator connector (4) a volume connection is established between the supply connection (2) and the spring-force accumulator connector (4), without the intermediate connection of a relay valve.

4. The electropneumatic parking brake module (1) according to any of the preceding claims, wherein the inlet-outlet valve unit (10) has at least one 2/2 way check valve (16).

5. The electropneumatic parking brake module (1) according to any of the preceding claims, wherein at least the first 3/2 way valve (14) is pneumatically controlled.

6. The electropneumatic parking brake module (1) according to claim 4, wherein the first 3/2 way valve (14) serves as an inlet-outlet valve for the spring-force accumulator connector (4) for ventilation of the spring-force accumulator connector (4) and the 2/2 way check valve (16) serves to block a ventilation of the spring-force accumulator connector (4).

7. The electropneumatic parking brake module (1) according to any of the preceding claims, wherein the first 3/2 way valve (14) has an inlet connection (14.1), a working connection (14.2) and a ventilation connection (14.3), and the first 3/2 way valve (14) is configured to reciprocally connect the working connection (14.2) to the inlet connection (14.1) and the ventilation connection (14.3).

8. The electropneumatic parking brake module (1) according to claim 7, wherein a supply pressure (pV) can be output at the input connection (14.1).

9. The electropneumatic parking brake module (1) according to any of claims 7 to 8, wherein a non-return valve (18) is arranged between the input connection (14.1) and the supply connector (2) to prevent a return flow from the spring-force accumulator connector (4) to the supply connector (2).

10. The electropneumatic parking brake module (1) according to any of claims 7 to 9, wherein the 2/2 way check valve (16) has a first check valve connection (16.1) and a second check valve connection (16.2), wherein the first check valve connection (16.1) is connected to the working connection (14.2) and the second check valve connection (16.2) is connected to the spring-force connector (4).

11. The electropneumatic parking brake module (1) according to any of the preceding claims, wherein the electropneumatic pilot control unit (12) has at least one second 3/2 way valve (20), wherein the second 3/2 way valve (20) is provided for outputting the first control pressure (p1).

12. The electropneumatic parking brake module (1) according claim 11, wherein the second 3/2 way valve (20) is formed as a bistable valve (21).

13. The electropneumatic parking brake module (1) according claim 12, wherein the bistable valve (21) has a first bistable valve connection (21.1), a second bistable valve connection (21.2) and a third bistable valve connection (21.3), wherein the first bistable valve connection (21.1) is connected to the supply connector (2), the second bistable valve connection (21.2) outputs the first control pressure (p1) and the third bistable valve connection (21.3) is connected to a vent.

14. The electropneumatic parking brake module (1) according claim 5 and 13, wherein the second bistable valve connection (21.2) is connected to a first control input (14.4) of the first 3/2 way valve (14).

15. The electropneumatic parking brake module (1) according to any of claims 1 to 10, wherein the electropneumatic pilot control unit (12) has a monostable inlet-outlet valve combination (65) with an inlet valve (70) and an outlet valve (72) for outputting the first control pressure (p1).

16. The electropneumatic parking brake module (1) according to claim 15, having a return line (67), which provides the pressure (pVS) output from the first 3/2 way valve (14) as the first control pressure (p1) at the inlet-outlet valve unit (10) .

17. The electropneumatic parking brake module (1) according to claim 16, wherein the pressure (pVS) output from the first 3/2 way valve (14) is provided throttled as first control pressure (p1) via the return line (67) at the inlet-outlet valve unit (10).

18. The electropneumatic parking brake module (1) according to any of claims 15 to 17, wherein the inlet valve (70) has a first inlet valve connection (70.1) connected to supply connector (2) and a second inlet valve connection (70.2) connected to the inlet-outlet valve unit (10), wherein by switching the inlet valve (70) the first control pressure (p1) can be output to the second inlet valve connection (70.2).

19. The electropneumatic parking brake module (1) according to any of claims 15 to 18, wherein the outlet valve (72) has a first outlet valve connection (72.1) connected to the inlet-outlet valve unit (10) and a second outlet valve connection (72.2) connected to a vent (5) for ventilating the first control pressure (p1).

20. The electropneumatic parking brake module (1) according to claim 16 or 17, wherein the return line (67) is directly connected to the inlet-outlet valve unit (10).

21. The electropneumatic parking brake module (1) according to claim 16 and 18, wherein the inlet valve (70) has a third inlet valve connection (70.3) connected to the return line (67), wherein in a first switching position of the inlet valve (70) the second inlet valve connection (70.2) is connected to the first inlet valve connection (70.1), and in a second switching position of the inlet valve (70) the second inlet valve connection (70.2) is connected to the third inlet valve connection (70.3).

22. The electropneumatic parking brake module (1) according to claim 16 and 19, wherein the outlet valve (72) has a third outlet valve connection (72.3) connected to the return line (67), wherein in a first switching position of the outlet valve (72) the first outlet valve connection (72.1) is connected to the third outlet valve connection (72.3), and in a second switching position of the outlet valve (72) the first outlet valve connection (72.1) is connected to the second outlet valve connection (72.2).

23. The electropneumatic parking brake module (1) according to any of the preceding claims, wherein the electropneumatic pilot control unit (12) has at least a third 3/2 way valve (22) for outputting a second control pressure (p2).

24. The electropneumatic parking brake module (1) according to claim 23, wherein the third 3/2 way valve (22) has an inlet connection (22.1), a working connection (22.2) and a ventilation connection (22.3), and the third 3/2 way valve (22) is configured to reciprocally connect the working connection (22.2) to the inlet connection (22.1) and the ventilation connection (22.3).

25. The electropneumatic parking brake module (1) according to claim 10 and 16, wherein the inlet connection (22.1) is connected to the supply connection (2), the working connection (22.2) is connected to a second control input (16.3) of the 2/2 way check valve (16) and the ventilation connection (22.3) is connected to a vent.

26. The electropneumatic parking brake module (1) according to any of the preceding claims, having a trailer control valve connection (30) for providing a trailer control pressure (pA).

27. The electropneumatic parking brake module (1) according to claim 26, wherein the trailer control valve connection (30) is connected to a trailer valve (32) that is provided to output in a first switching position at least the spring-force accumulator brake pressure (pF) as the trailer control pressure (pA) at the trailer control valve connection (30).

28. The electropneumatic parking brake module (1) according to claim 27, wherein the trailer valve (32) has a second switching position for executing a trailer control position function.

29. The electropneumatic parking brake module (1) according to claim 28, wherein the trailer valve (32) is configured as a fourth 3/2 way valve (34) and has a first trailer valve connection (34.1), a second trailer valve connection (34.2) and a third trailer valve connection (34.3), wherein the first trailer valve connection (34.1) is connected to the supply connection (2), the second trailer valve connection (34.2) is connected to the trailer control valve connection (30) and the third trailer valve connection (34.3) is connected to a branch line (36) which branches from a spring-force brake pressure line (38) connected to the spring-force accumulator connector (4) .

30. The electropneumatic parking brake module (1) according to any of claims 27 to 29, wherein the trailer valve (32) is in a currentless position in the
- first switching position; or
- the second switching position.

31. The electropneumatic parking brake module (1) according to any of the preceding claims, having an electrical control unit (ECU) with an electrical connection (40) for receiving parking brake signals (HCU) and for providing corresponding switching signals (S1, S2, S3) at least to the pilot control unit (12).

32. The electropneumatic parking brake module (1) according to any of the preceding claims, having a pressure sensor (42), which is provided to record the spring-force accumulator brake pressure (pF) and to provide a corresponding pressure signal (SD).

## Revendications

1. Module de frein de stationnement électropneumatique (1), avec un raccord d'alimentation (2) pour raccorder une réserve d'air comprimé (3),
au moins un raccord d'accumulateur élastique (4) pour raccorder au moins un cylindre de frein d'accumulateur élastique (6),
une unité de valves d'admission-échappement (10) qui peut occuper au moins une première position de commutation et une seconde position de commutation, et
une unité de pilotage électropneumatique (12) pour réguler au moins une première pression de commande (p1) au niveau de l'unité de valves d'admission-échappement (10),
dans lequel dans la première position de commutation de l'unité de valves d'admission-échappement (10), le raccord d'accumulateur élastique (4) est relié au raccord d'alimentation (2) pour réguler une pression de frein d'accumulateur élastique (pF), et dans la seconde position de commutation de l'unité de valves d'admission-échappement (10), le raccord d'accumulateur élastique (4) est relié à un raccord de purge (14.3) de l'unité de valves d'admission-échappement (10),
dans lequel l'unité de valves d'admission-échappement (10) présente au moins un premier distributeur 3/2 (14) avec exactement deux positions de commutation,
**caractérisé en ce que**
l'unité de valves d'admission-échappement (10) est dans la seconde position de commutation lorsque la première pression de commande (p1) se situe en-dessous d'une première valeur limite.

2. Module de frein de stationnement électropneumatique (1) selon la revendication 1, dans lequel dans la première position de commutation de l'unité de valves d'admission-échappement (10), la pression de frein d'accumulateur élastique (pF) peut être régulée directement depuis le raccord d'alimentation (2) jusqu'au niveau du raccord d'accumulateur élastique (4).

3. Module de frein de stationnement électropneumatique (1) selon la revendication 2, dans lequel lors de la régulation directe de la pression de frein d'accumulateur élastique (pF) depuis le raccord d'alimentation (2) jusqu'au niveau du raccord d'accumulateur élastique (4), une liaison volumique est créée entre le raccord d'alimentation (2) et le raccord d'accumulateur élastique (4), sans commutation intermédiaire d'une valverelais.

4. Module de frein de stationnement électropneumatique (1) selon l'une des revendications précédentes, dans lequel l'unité de valves d'admission-échappement (10) présente au moins une valve d'arrêt distributrice 2/2 (16).

5. Module de frein de stationnement électropneumatique (1) selon l'une des revendications précédentes, dans lequel au moins le premier distributeur 3/2 (14) est commandé pneumatiquement.

6. Module de frein de stationnement électropneumatique (1) selon la revendication 4, dans lequel le premier distributeur 3/2 (14) sert de valve d'admission-échappement pour le raccord d'accumulateur élastique (4) afin de ventiler et purger le raccord d'accumulateur élastique (4) et la valve d'arrêt distributrice 2/2 (16) sert pour arrêter une ventilation et une purge du raccord d'accumulateur élastique (4).

7. Module de frein de stationnement électropneumatique (1) selon l'une des revendications précédentes, dans lequel le premier distributeur 3/2 (14) présente un raccord d'admission (14.1), un raccord de travail (14.2) et un raccord de purge (14.3), et le premier distributeur 3/2 (14) est conçu pour relier alternativement le raccord de travail (14.2) au raccord d'admission (14.1) et au raccord de purge (14.3).

8. Module de frein de stationnement électropneumatique (1) selon la revendication 7, dans lequel une pression d'alimentation (pV) peut être régulée au niveau du raccord d'entrée (14.1).

9. Module de frein de stationnement électropneumatique (1) selon l'une des revendications 7 à 8, dans lequel un clapet de non-retour (18) est agencé entre le raccord d'entrée (14.1) et le raccord d'alimentation (2) pour empêcher une réaspiration depuis le raccord d'accumulateur élastique (4) vers le raccord d'alimentation (2).

10. Module de frein de stationnement électropneumatique (1) selon l'une des revendications 7 à 9, dans lequel la valve d'arrêt distributrice 2/2 (16) présente un premier raccord de valve d'arrêt (16.1) et un second raccord de valve d'arrêt (16.2), dans lequel le premier raccord de valve d'arrêt (16.1) est relié au raccord de travail (14.2) et le second raccord de valve d'arrêt (16.2) est relié au raccord d'accumulateur élastique (4).

11. Module de frein de stationnement électropneumatique (1) selon l'une des revendications précédentes, dans lequel l'unité de pilotage électropneumatique (12) présente au moins un deuxième distributeur 3/2 (20), dans lequel le deuxième distributeur 3/2 (20) est prévu pour réguler la première pression de commande (p1).

12. Module de frein de stationnement électropneumatique (1) selon la revendication 11, dans lequel le deuxième distributeur 3/2 (20) est conçu en tant que valve bistable (21) .

13. Module de frein de stationnement électropneumatique (1) selon la revendication 12, dans lequel la valve bistable (21) présente un premier raccord de valve bistable (21.1), un deuxième raccord de valve bistable (21.2) et un troisième raccord de valve bistable (21.3), dans lequel le premier raccord de valve bistable (21.1) est relié au raccord d'alimentation (2), le deuxième raccord de valve bistable (21.2) régule la première pression de commande (p1) et le troisième raccord de valve bistable (21.3) est relié à une purge.

14. Module de frein de stationnement électropneumatique (1) selon la revendication 5 et 13, dans lequel le deuxième raccord de valve bistable (21.2) est relié à une première entrée de commande (14.4) du premier distributeur 3/2 (14).

15. Module de frein de stationnement électropneumatique (1) selon l'une des revendications précédentes 1 à 10, dans lequel l'unité de pilotage électropneumatique (12) présente une combinaison de valves d'admission-échappement monostable (65) avec une valve d'admission (70) et une valve d'échappement (72) pour réguler la première pression de commande (p1).

16. Module de frein de stationnement électropneumatique (1) selon la revendication 15, qui présente un tuyau de recyclage (67) qui fournit la pression (pVS) régulée par le premier distributeur 3/2 (14) en tant que première pression de commande (p1) au niveau de l'unité de valves d'admission-échappement (10).

17. Module de frein de stationnement électropneumatique (1) selon la revendication 16, dans lequel la pression (pVS) régulée par le premier distributeur 3/2 (14) est fournie de façon bridée en tant que première pression de commande (p1) via un tuyau de recyclage (67) au niveau de l'unité de valves d'admission-échappement (10).

18. Module de frein de stationnement électropneumatique (1) selon l'une des revendications précédentes 15 à 17, dans lequel la valve d'admission (70) présente un premier raccord de valve d'admission (70.1) relié au raccord d'alimentation (2) et un deuxième raccord de valve d'admission (70.2) relié à l'unité de valves d'admission-échappement (10), dans lequel par commutation de la valve d'admission (70) la première pression de commande (p1) peut être régulée au niveau du deuxième raccord de valve d'admission (70.2).

19. Module de frein de stationnement électropneumatique (1) selon l'une des revendications précédentes 15 à 18, dans lequel la valve d'échappement (72) présente un premier raccord de valve d'échappement (72.1) relié à l'unité de valves d'admission-échappement (10) et un deuxième raccord de valve d'échappement (72.2) relié à une purge (5) pour purger la première pression de commande (p1).

20. Module de frein de stationnement électropneumatique (1) selon la revendication 16 ou 17, dans lequel le tuyau de recyclage (67) est directement relié à l'unité de valves d'admission-échappement (10).

21. Module de frein de stationnement électropneumatique (1) selon la revendication 16 et 18, dans lequel la valve d'admission (70) présente un troisième raccord de valve d'admission (70.3) relié au tuyau de recyclage (67), dans lequel, dans une première position de commutation de la valve d'admission (70), le deuxième raccord de valve d'admission (70.2) est relié au premier raccord de valve d'admission (70.1), et dans une seconde position de commutation de la valve d'admission (70) le deuxième raccord de valve d'admission (70.2) est relié au troisième raccord de valve d'admission (70.3).

22. Module de frein de stationnement électropneumatique (1) selon la revendication 16 et 19, dans lequel la valve d'échappement (72) présente un troisième raccord de valve d'échappement (72.3) relié au tuyau de recyclage (67), dans lequel dans une première position de commutation de la valve d'échappement (72) le premier raccord de valve d'échappement (72.1) est relié au troisième raccord de valve d'échappement (72.3), et dans une seconde position de commutation de la valve d'échappement (72) le premier raccord de valve d'échappement (72.1) est relié au deuxième raccord de valve d'échappement (72.2).

23. Module de frein de stationnement électropneumatique (1) selon l'une des revendications précédentes, dans lequel l'unité de pilotage électropneumatique (12) présente au moins un troisième distributeur 3/2 (22) pour réguler une seconde pression de commande (p2).

24. Module de frein de stationnement électropneumatique (1) selon la revendication 23, dans lequel le troisième distributeur 3/2 (22) présente un raccord d'admission (22.1), un raccord de travail (22.2) et un raccord de purge (22.3), et le troisième distributeur 3/2 (22) est conçu pour relier alternativement le raccord de travail (22.2) au raccord d'admission (22.1) et au raccord de purge (22.3).

25. Module de frein de stationnement électropneumatique (1) selon la revendication 10 et 16, dans lequel le raccord d'admission (22.1) est relié au raccord d'alimentation (2), le raccord de travail (22.2) est relié à une seconde entrée de commande (16.3) de la valve d'arrêt distributrice 2/2 (16) et le raccord de purge (22.3) est relié à une purge.

26. Module de frein de stationnement électropneumatique (1) selon l'une des revendications précédentes, qui présente un raccord de valve de commande de remorque (30) pour fournir une pression de commande de remorque (pA).

27. Module de frein de stationnement électropneumatique (1) selon la revendication 26, dans lequel le raccord de valve de commande de remorque (30) est relié à une valve de remorque (32) qui est prévue pour, dans une première position de commutation, réguler au moins la pression de frein d'accumulateur élastique (pF) en tant que pression de commande de remorque (pA) au niveau du raccord de valve de commande de remorque (30).

28. Module de frein de stationnement électropneumatique (1) selon la revendication 27, dans lequel la valve de remorque (32) présente une seconde position de commutation pour exécuter une fonction de position de contrôle de remorque.

29. Module de frein de stationnement électropneumatique (1) selon la revendication 28, dans lequel la valve de remorque (32) est conçue en tant que quatrième distributeur 3/2 (34) et présente un premier raccord de valve de remorque (34.1), un deuxième raccord de valve de remorque (34.2) et un troisième raccord de valve de remorque (34.3), dans lequel le premier raccord de valve de remorque (34.1) est relié au raccord d'alimentation (2), le deuxième raccord de valve de remorque (34.2) est relié au raccord de valve de commande de remorque (30) et le troisième raccord de valve de remorque (34.3) est relié à un tuyau de bifurcation (36) qui bifurque depuis un tuyau de pression de frein d'accumulateur élastique (38) relié au raccord d'accumulateur élastique (4).

30. Module de frein de stationnement électropneumatique (1) selon l'une des revendications 27 à 29, dans lequel la valve de remorque (32) est dans une position sans courant dans
- la première position de commutation ; ou
- la seconde position de commutation.

31. Module de frein de stationnement électropneumatique (1) selon l'une des revendications précédentes, qui présente une unité de commande électrique (ECU) avec un raccord électrique (40) pour recevoir des signaux de frein de stationnement (HCU) et pour fournir des signaux de commutation (S1, S2, S3) correspondants au moins au niveau de l'unité de pilotage (12).

32. Module de frein de stationnement électropneumatique (1) selon l'une des revendications précédentes, qui présente un capteur de pression (42) qui est prévu pour détecter la pression de frein d'accumulateur élastique (pF) et fournir un signal de pression (SD) correspondant.
